# EUROPEAN PATENT APPLICATION

(11) **EP 4 657 221 A1**
(43) Date of publication of application: **03.12.2025**
(21) Application number: 24813768.9
(22) Date of filing: 28.02.2024
(51) Int. Cl.: G06F 3/0481

(54) **INTERACTION METHOD AND APPARATUS**

(30) Priority: 02.06.2023 CN 202310654308
(71) Applicant: Huawei Technologies Co., Ltd., Shenzhen, Guangdong 518129 (CN)
(72) Inventor: WANG, Yilun, Shenzhen, Guangdong 518129 (CN); BIAN, Sucheng, Shenzhen, Guangdong 518129 (CN); ZHANG, Li, Shenzhen, Guangdong 518129 (CN); LIU, Min, Shenzhen, Guangdong 518129 (CN); ZHANG, Leshao, Shenzhen, Guangdong 518129 (CN)
(74) Representative: Maiwald GmbH
(86) International application number: PCT/CN2024/079098
(87) International publication number: WO 2024/244562

(57) **Abstract**

An interaction method and an apparatus are disclosed, and relate to the field of terminal technologies. The method includes: An electronic device receives a first user operation, and obtains a first text in response to the first user operation, where the first user operation is used to enter a text, and the first text includes the text entered by using the first user operation; searches, based on the first text, for media information that matches semantics of the first text; changes a first-style cursor to a second-style cursor, where the second-style cursor indicates that the media information is found; and receives a second user operation on the second-style cursor, and displays the media information in response to the second user operation. According to this application, complexity of a user operation can be reduced, and user experience can be improved.

## Description

### CROSS-REFERENCE TO RELATED APPLICATIONS

This application claims priority to Chinese Patent Application No. 202310654308.7, filed with the China National Intellectual Property Administration on June 2, 2023 and entitled "INTERACTION METHOD AND APPARATUS", which is incorporated herein by reference in its entirety.

### TECHNICAL FIELD

This application relates to the field of terminal technologies, and in particular, to an interaction method and an apparatus.

### BACKGROUND

With rapid development of mobile internet technologies, when a user uses an electronic device (for example, a mobile phone or a tablet computer), there are more scenarios in which multimedia information such as an image or a video in the electronic device is invoked. For example, when the user edits a record by using a memo application, if the user needs to insert a related image into entered text content, the user usually needs to start a gallery application, manually find a target image, and then insert the target image into a text by using a user operation. This results in cumbersome user operations and a subpar user experience.

### SUMMARY

Embodiments of this application provide an interaction method and an apparatus, which may be applied to an electronic device, to automatically search for matched media information based on content entered by a user, thereby simplifying a user operation and improving user experience.

According to a first aspect, an interaction method is provided. The method may be applied to an electronic device, for example, a mobile phone, a tablet computer, or a wearable device. The method includes: The electronic device receives a first user operation, and obtains a first text in response to the first user operation, where the first user operation is used to enter a text, and the first text includes the text entered by using the first user operation; the electronic device searches, based on the first text, for media information that matches semantics of the first text; the electronic device changes a first-style cursor to a second-style cursor, where the second-style cursor indicates that the media information is found; and the electronic device receives a second user operation on the second-style cursor, and displays the found media information in response to the second user operation.

Optionally, the media information includes one or more of the following: an image, a video, an audio, a document, an electronic bill, an electronic card, an address book, contact information, a service widget, and a URL.

In the foregoing implementation, the matched media information may be automatically searched for based on the text entered by a user, and the user does not need to enter a search keyword and trigger a function button for executing a search command, so that a user operation can be simplified, and user experience can be improved. In addition, a cursor is changed to indicate that the matched media information is found, so that the user can learn of a search status, and can perform a subsequent operation based on the search status.

In a possible implementation, the second-style cursor indicates a type and/or content of the found media information. In this way, the user can intuitively learn of the type and/or content of the found media information, to improve user experience.

In a possible implementation, the second-style cursor includes one or more of the following: a thumbnail of the content of the media information; and indication information of a media type, where the indication information of the media type includes an icon indicating the type of media information, and/or a text indicating the type of the media information.

In a possible implementation, the media information includes an image, and a thumbnail of a found image is displayed in the second-style cursor, so that the search status can be more intuitively indicated to the user. Optionally, the thumbnail is a thumbnail of an image that is in found images and that has a highest degree of matching with the first text. In another possible implementation, the media information includes a video, and a thumbnail of a video frame in a found video is displayed in the second-style cursor, so that the search status can be more intuitively indicated to the user. Optionally, the thumbnail is a thumbnail of a video frame in a video that is in found videos and that has a highest degree of matching with the first text.

In a possible implementation, the second-style cursor indicates that there are a plurality of types of found media information.

In a possible implementation, when the second-style cursor indicates that there are a plurality of types of found media information, receiving the second user operation on the second-style cursor, and displaying the media information includes: receiving a third user operation; displaying a first menu in response to the third user operation, where the first menu includes a plurality of function options, and each of the plurality of function options corresponds to one of the plurality of media types; receiving a selection operation of selecting at least one function option in the plurality of function options by the user; and displaying, in response to the selection operation, media information corresponding to the at least one function option. Optionally, the third user operation includes tapping or touching and holding the second-style cursor.

In the foregoing implementation, when the second-style cursor indicates that there are a plurality of types of found media information, the user may view all of the plurality of types based on the user operation, so that the user can select, as needed, one or more types of media information for viewing.

Optionally, the second user operation is used to trigger one of the plurality of function options, and in response to the second user operation, a type of media information that is in the plurality of types of found media information and that corresponds to the function option is displayed.

Optionally, the second user operation is used to trigger at least two of the plurality of function options, and in response to the second user operation, at least two types of media information that are in the plurality of types of found media information and that correspond to the function options are displayed.

In a possible implementation, the first user operation is performed on a text input box of a first application; and after displaying the media information that matches the semantics of the first text, the method further includes: receiving a fourth user operation, selecting first media information from the displayed media information in response to the fourth user operation, and applying the first media information to the first application. The fourth user operation is used to: select the first media information from the displayed media information, and apply the first media information to the first application.

Optionally, applying the first media information to the first application includes: adding the first media information to a record edited by using the first application (for example, a memo application); or adding the first media information as an attachment to an email edited by using the first application (for example, an email application); or sending the first media information to a target user who performs a conversation by using the first application (for example, a social application).

In a possible implementation, after changing the first-style cursor to the second-style cursor or after receiving the second user operation, the method further includes: highlighting the first text, so that the user can learn of text content that matches a current search result.

Optionally, after changing the first-style cursor to the second-style cursor or after receiving the second user operation, the method further includes: receiving a fifth user operation, where the fifth user operation is used to move a cursor to a first position, and the first position is within a range of the first text; and moving the second-style cursor to the first position in response to the fifth user operation.

Optionally, after changing the first-style cursor to the second-style cursor and before receiving the second user operation, the method further includes: receiving a sixth user operation, and unhighlighting a part of text in the highlighted first text in response to the sixth user operation; and searching, based on a second text, for media information that matches semantics of the second text, where the second text is a text highlighted in response to the sixth user operation. By using the operation, search keywords can be reduced based on a user requirement to obtain a search result that meets a user requirement.

Optionally, after changing the first-style cursor to the second-style cursor and before receiving the second user operation, the method further includes: receiving a seventh user operation, and highlighting a third text in response to the seventh user operation, where the third text is a text other than the first text; and searching, based on a fourth text, for media information that matches semantics of the fourth text, where the fourth text includes the first text and the third text. By using the operation, search keywords can be added based on a user requirement to obtain a search result that meets a user requirement.

In a possible implementation, after the media information that matches the semantics of the first text is found or after the second user operation is received, the method further includes: displaying a search keyword.

Optionally, the method further includes: receiving an eighth user operation, where the eighth user operation is used to: update the search keyword, and request to search for matched media information based on an updated search keyword; in response to the eighth user operation, searching for the matched media information based on the updated search keyword; and displaying the media information found based on the updated search keyword. In this implementation, media information may be searched based on a keyword specified by the user, so that a search result meets a user requirement.

In a possible implementation, obtaining the first text includes: obtaining the text entered by using the first user operation and a context associated with the text.

Optionally, the first text may include the text entered by using the first user operation, and may further include a previously entered text on this basis. In a scenario of an interaction application, the text entered by using the first user operation is chat content (a text) used to be sent to a target user, and the context associated with the text includes chat content (a text) included in a chat message from the target user.

In a possible implementation, searching, based on the first text, for the matched media information includes one or more of the following: searching the electronic device for the media information that matches the first text; searching another electronic device interconnected with the electronic device for the media information that matches the first text; and searching cloud space of the electronic device for the media information that matches the first text.

According to a second aspect, an interaction method is provided. The method may be applied to an electronic device, for example, a mobile phone, a tablet computer, or a wearable device. The method includes: receiving a first user operation, where the first user operation is used to trigger a first function option in a user interface, and the first function option corresponds to a first media information type; obtaining a context associated with the first user operation and/or the first function option; searching for matched media information based on semantics of the context and the first media information type corresponding to the first function option; and displaying the found media information.

Optionally, the media information includes one or more of the following: an image, a video, an audio, a document, an electronic bill, an electronic card, an address book, contact information, a service widget, and a URL.

In the foregoing implementation, the matched media information may be automatically searched for based on the first function option triggered by a user, and the user does not need to enter a search keyword and trigger a function button for executing a search command, so that a user operation can be simplified, and user experience can be improved.

In a possible implementation, obtaining the context associated with the first user operation includes: obtaining a text entered by the user before the first user operation and/or a text included in a message received by the electronic device, and using the text as the context.

In a possible implementation, obtaining the context associated with the first function option includes: obtaining first information associated with the first function option, where the first information is used to describe media information corresponding to the first function option; and using the first information as the context.

In a possible implementation, searching for the matched media information includes one or more of the following: searching the electronic device for the matched media information; searching another electronic device interconnected with the electronic device for the matched media information; and searching cloud space of the electronic device for the matched media information.

According to a third aspect, an apparatus is provided. The apparatus includes a unit or module configured to perform the method according to any one of the implementations of the first aspect.

In a possible implementation, the apparatus includes a processing unit and an interaction unit. The processing unit is located in a processor, and the interaction unit may include a unit that has a user operation sensing function, for example, a touch control unit or an audio collector. The interaction unit is configured to receive a first user operation. The processing unit is configured to: obtain a first text in response to the first user operation; search, based on the first text, for media information that matches semantics of the first text; and change a first-style cursor to a second-style cursor, where the second-style cursor indicates that the media information is found, the first user operation is used to enter a text, and the first text includes the text entered by using the first user operation. The interaction unit is further configured to receive a second user operation on the second-style cursor. The processing unit is further configured to display the media information in response to the second user operation.

In a possible implementation, the second-style cursor indicates a type and/or content of the found media information.

In a possible implementation, the second-style cursor includes one or more of the following: a thumbnail of the content of the media information; and indication information of a media type, where the indication information of the media type includes an icon indicating the type of media information, and/or a text indicating the type of the media information.

Optionally, the media information includes an image, and a thumbnail of a found image is displayed in the second-style cursor. Alternatively, the media information includes a video, and a thumbnail of a video frame in a found video is displayed in the second-style cursor.

In a possible implementation, the second-style cursor indicates that media information of a plurality of media types is found. Optionally, the interaction unit is specifically configured to receive a third user operation. The processing unit is specifically configured to display a first menu in response to the third user operation, where the first menu includes a plurality of function options, and each of the plurality of function options corresponds to one of the plurality of media types. The interaction unit is further configured to receive a selection operation of selecting at least one function option in the plurality of function options by the user. The processing unit is further configured to display, in response to the selection operation, media information corresponding to the at least one function option.

In a possible implementation, the first user operation is performed on a text input box of a first application; and after displaying the media information, the interaction unit is further configured to receive a fourth user operation, and the processing unit is further configured to: select first media information from the displayed media information in response to the fourth user operation, and apply the first media information to the first application.

In a possible implementation, after the first-style cursor is changed to the second-style cursor or after the second user operation is received, the processing unit is further configured to highlight the first text.

In a possible implementation, after the first-style cursor is changed to the second-style cursor and before the second user operation is received, the interaction unit is further configured to receive a fifth user operation, where the fifth user operation is used to move a cursor to a first position, and the first position is within a range of the first text; and the processing unit is further configured to move the second-style cursor to the first position in response to the fifth user operation.

In a possible implementation, after the first-style cursor is changed to the second-style cursor and before the second user operation is received, the interaction unit is further configured to receive a sixth user operation, and the processing unit is further configured to: unhighlight a part of text in the highlighted first text in response to the sixth user operation; and search, based on a second text, for media information that matches semantics of the second text, where the second text is a text highlighted in response to the sixth user operation.

In a possible implementation, after the first-style cursor is changed to the second-style cursor and before the second user operation is received, the interaction unit is further configured to receive a seventh user operation, and the processing unit is further configured to: highlight a third text in response to the seventh user operation, where the third text is a text other than the first text; and search, based on a fourth text, for media information that matches semantics of the fourth text, where the fourth text includes the first text and the third text.

In a possible implementation, after the media information that matches the semantics of the first text is found or after the second user operation is received, the processing unit is further configured to display a search keyword. Optionally, the interaction unit is further configured to receive an eighth user operation, where the eighth user operation is used to: update the search keyword, and request to search for matched media information based on an updated search keyword. The processing unit is further configured to: in response to the eighth user operation, search for the matched media information based on the updated search keyword; and display the media information found based on the updated search keyword.

In a possible implementation, the processing unit is specifically configured to obtain the text entered by using the first user operation and a context associated with the text entered by using the first user operation.

In a possible implementation, when searching, based on the first text, for the media information that matches the semantics of the first text, the processing unit performs one or more of the following: searching an electronic device for the media information that matches the semantics of the first text; searching another electronic device interconnected with the electronic device for the media information that matches the semantics of the first text; and searching cloud space of the electronic device for the media information that matches the semantics of the first text.

In a possible implementation, the media information includes one or more of the following: an image, a video, an audio, a document, an electronic bill, an electronic card, an address book, contact information, a service widget, and a URL.

According to a fourth aspect, an apparatus is provided. The apparatus includes a unit or module configured to perform the method according to any one of the implementations of the second aspect.

In a possible implementation, the apparatus includes a processing unit and an interaction unit. The processing unit is located in a processor, and the interaction unit may include a unit that has a user operation sensing function, for example, a touch control unit or an audio collector. The interaction unit is configured to receive a first user operation, where the first user operation is used to trigger a first function option in a user interface, and the first function option corresponds to a first media information type. The processing unit is configured to: obtain a context associated with the first user operation and/or the first function option, search for matched media information based on semantics of the context and the first media information type corresponding to the first function option, and display the found media information.

In a possible implementation, the processing unit is specifically configured to: obtain a text entered by a user before the first user operation and/or a text included in a message received by an electronic device, and use the text as the context.

In a possible implementation, the processing unit is specifically configured to: obtain first information associated with the first function option, where the first information is used to describe media information corresponding to the first function option; and use the first information as the context.

In a possible implementation, when searching for the matched media information, the processing unit is specifically configured to perform one or more of the following: searching the electronic device for the matched media information; searching another electronic device interconnected with the electronic device for the matched media information; and searching cloud space of the electronic device for the matched media information.

In a possible implementation, the media information includes one or more of the following: an image, a video, an audio, a document, an electronic bill, an electronic card, an address book, contact information, a service widget, and a URL.

According to a fifth aspect, an apparatus is provided, including one or more processors and one or more memories. The one or more memories store one or more programs, and when the program is executed by the one or more processors, the apparatus is enabled to perform the method according to any one of the implementations of the first aspect or the method according to any one of the implementations of the second aspect.

According to a sixth aspect, a chip system is provided. The chip system includes at least one chip and a memory, and the at least one chip is configured to read and execute a program stored in the memory, to implement the method according to any one of the implementations of the first aspect or the method according to any one of the implementations of the second aspect.

According to a seventh aspect, a computer-readable storage medium is provided. The computer-readable storage medium includes a program, and when the program is run on an apparatus, the apparatus is enabled to perform the method according to any one of the implementations of the first aspect or the method according to any one of the implementations of the second aspect.

According to an eighth aspect, a computer program product is provided. When the computer program product runs on an apparatus, the apparatus is enabled to perform the method according to any one of the implementations of the first aspect or the method according to any one of the implementations of the second aspect.

### BRIEF DESCRIPTION OF DRAWINGS

FIG. 1 is a diagram of a hardware structure of an electronic device according to an embodiment of this application;
FIG. 2 is a block diagram of a software system architecture of an electronic device according to an embodiment of this application;
FIG. 3 is a diagram of a cursor style change according to an embodiment of this application;
FIG. 4 is a diagram of another cursor style change according to an embodiment of this application;
FIG. 5 is a diagram of still another cursor style change according to an embodiment of this application;
FIG. 6(a) to FIG. 6(d) are a diagram of yet another cursor style change according to an embodiment of this application;
FIG. 7a-1 to FIG. 7a-5 are a diagram of user interfaces for automatically searching for matched media information and performing a cursor change based on a user input in a memo application scenario according to an embodiment of this application;
FIG. 7b-1 to FIG. 7b-4 are a diagram of user interfaces for displaying a search result by triggering a changed cursor in a memo application scenario according to an embodiment of this application;

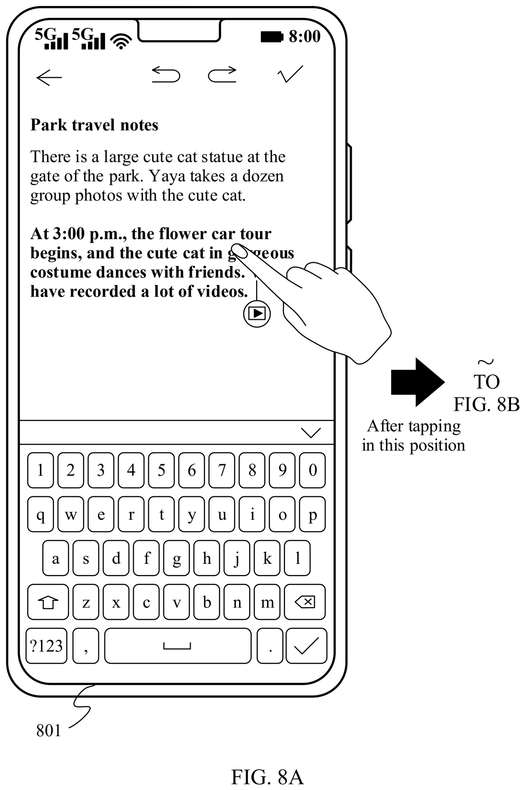

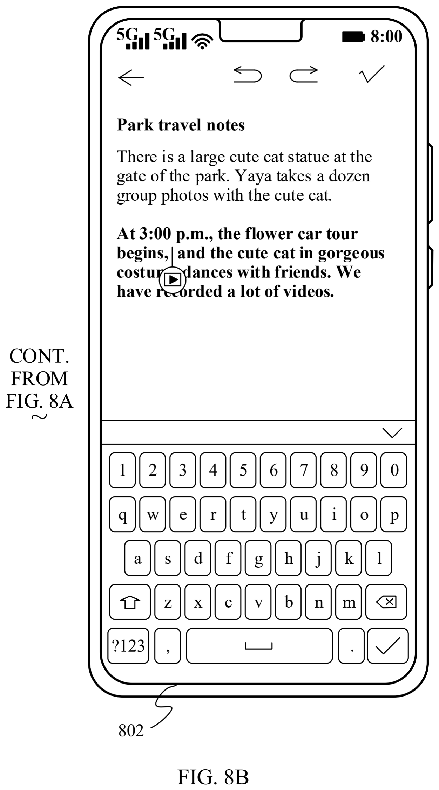

FIG. 8A and FIG. 8B are a diagram of user interfaces for highlighting text content that matches a search result in a memo application scenario according to an embodiment of this application;

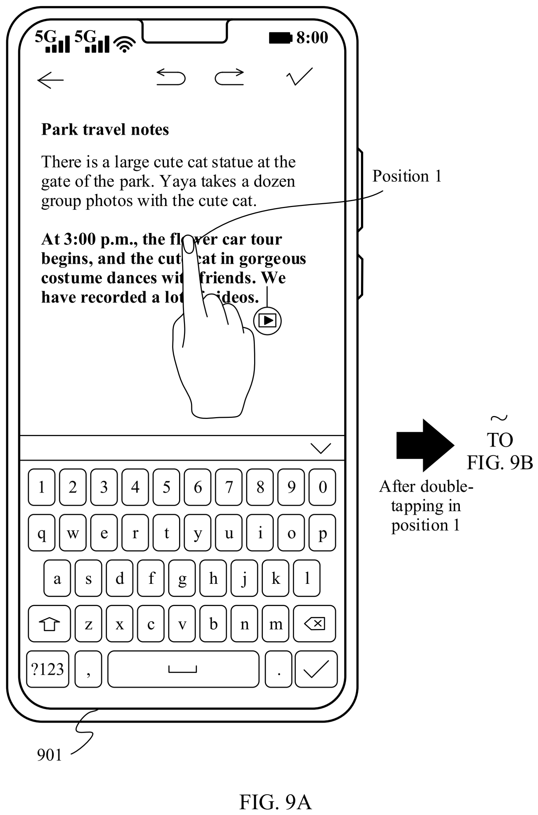

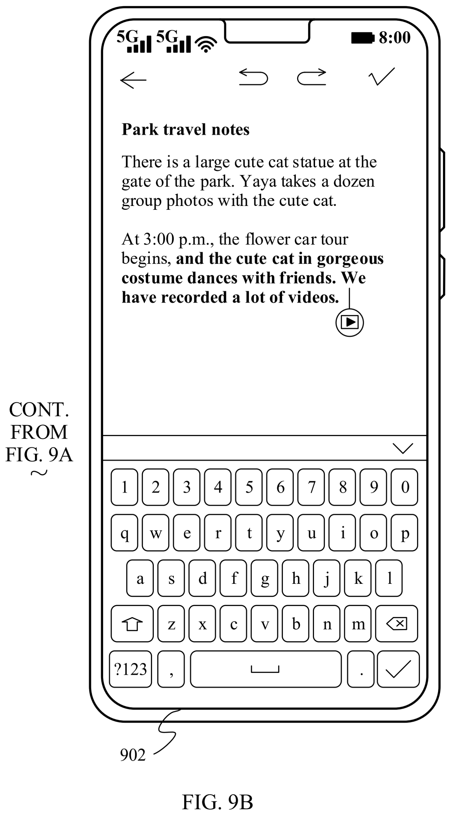

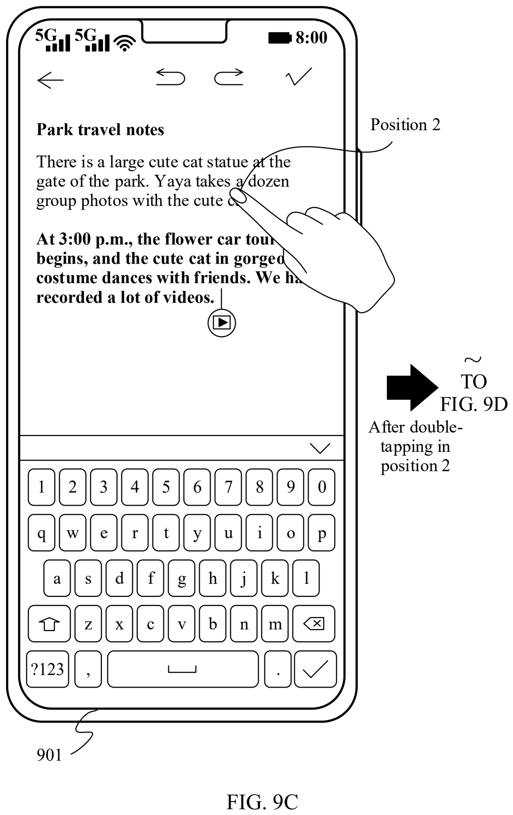

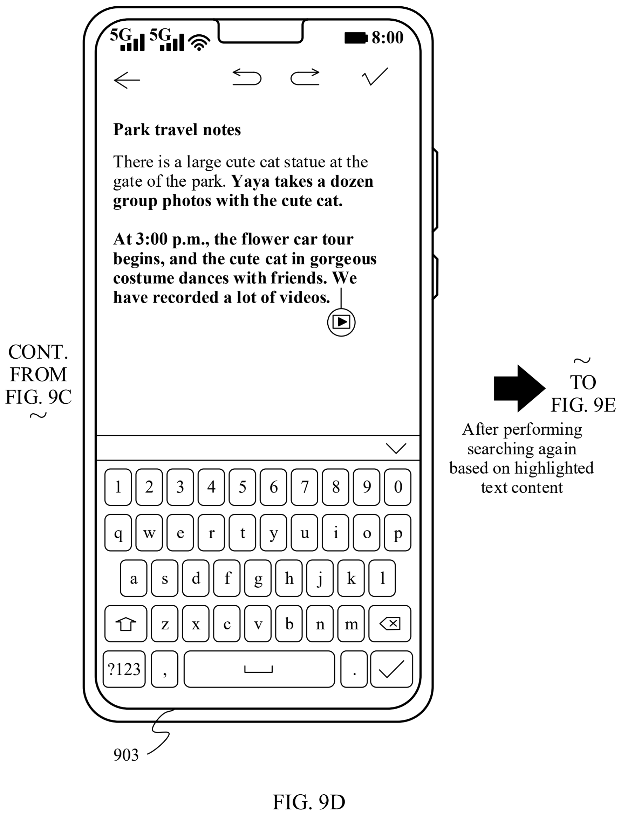

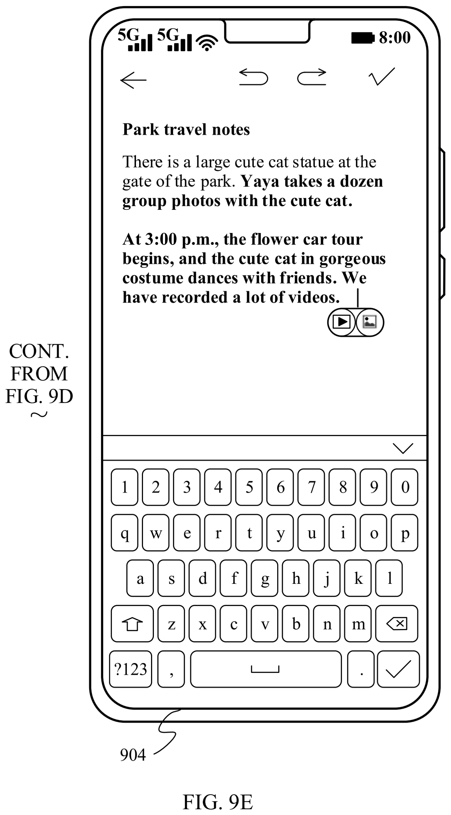

FIG. 9A to FIG. 9E are a diagram of user interfaces for increasing or decreasing highlighted text content to trigger a related processing process in a memo application scenario according to an embodiment of this application;

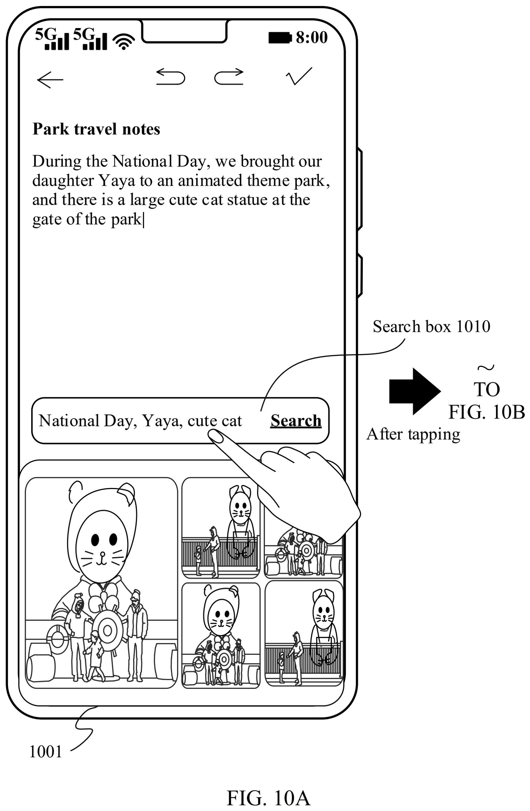

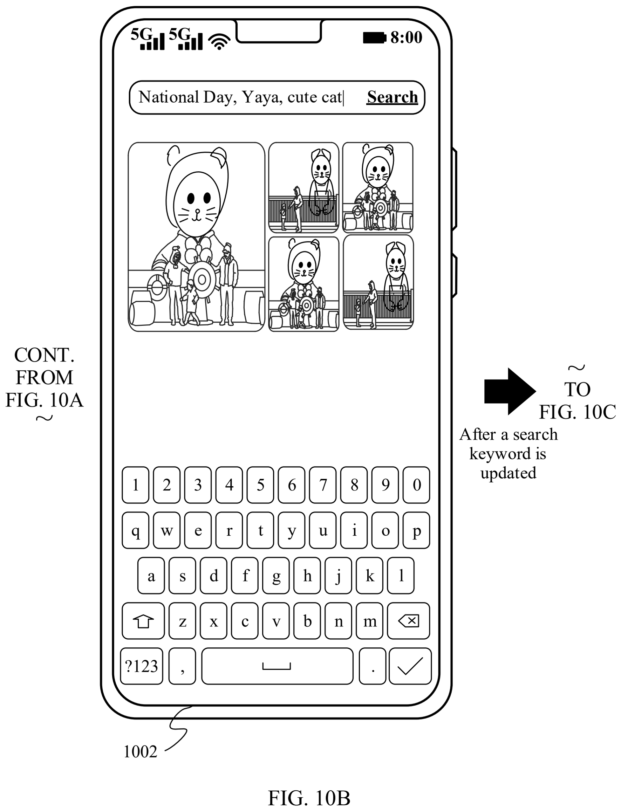

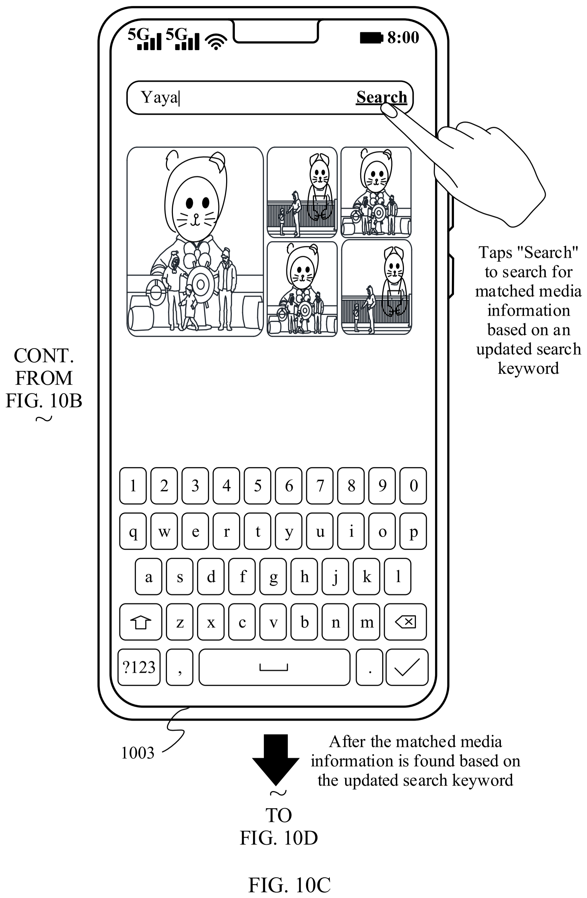

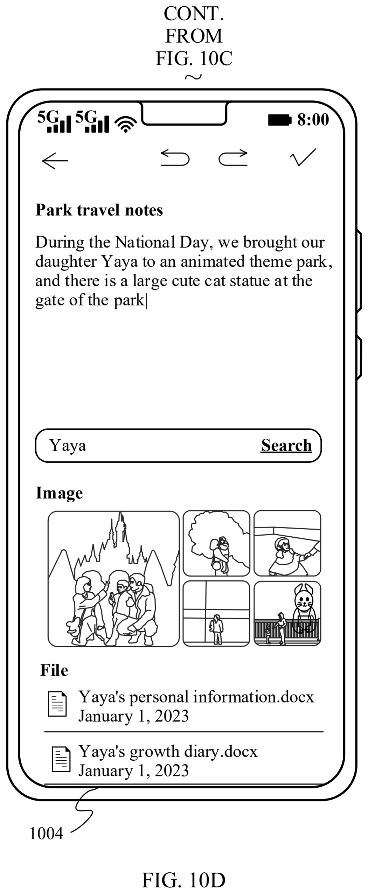

FIG. 10A to FIG. 10D are a diagram of user interfaces for changing a search keyword to trigger a related processing process in a memo application scenario according to an embodiment of this application;

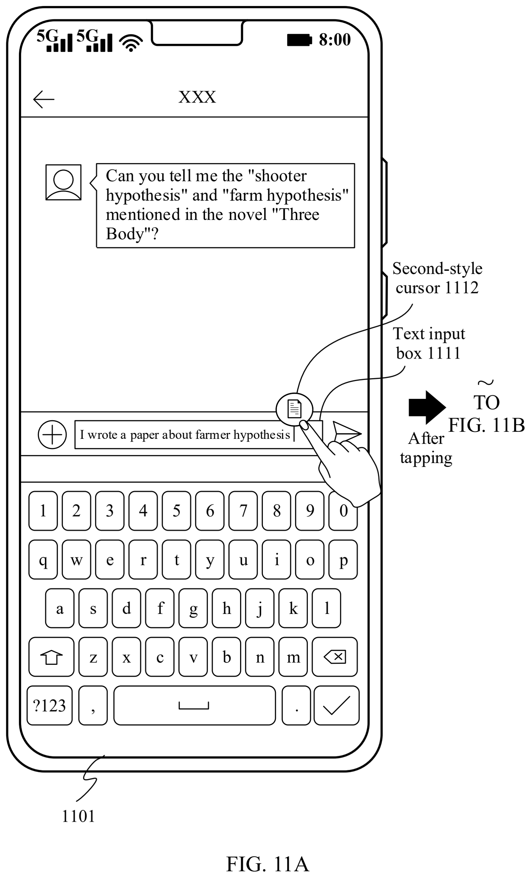

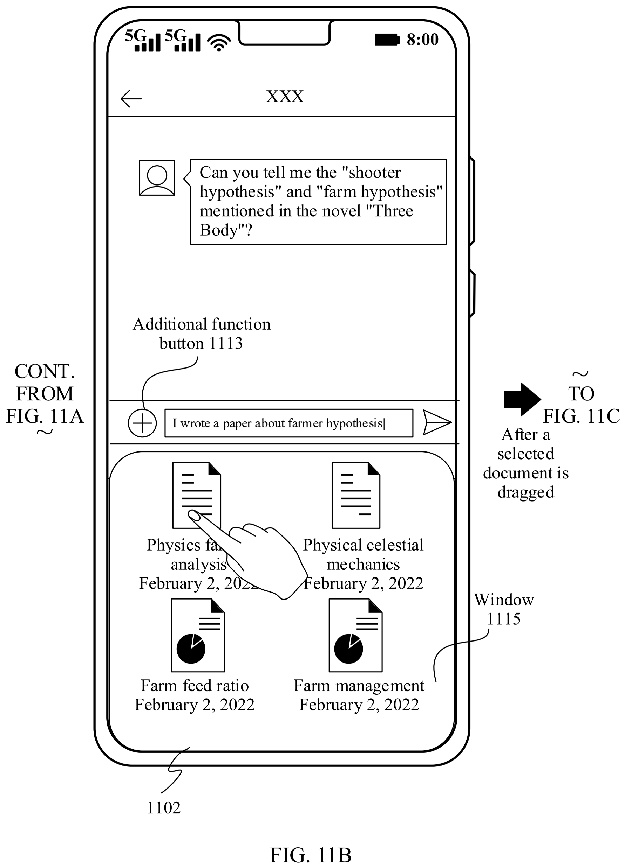

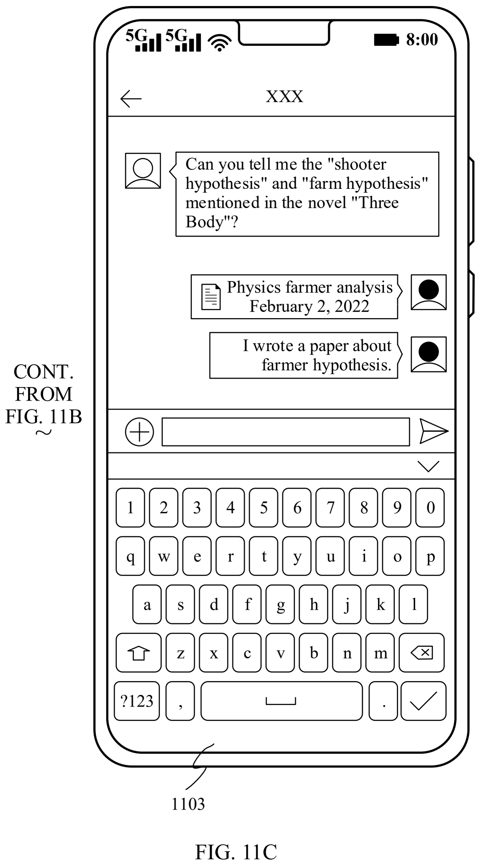

FIG. 11A to FIG. 11C are a diagram of user interfaces for automatically searching for matched media information based on a user input and displaying a search result in a social application scenario according to an embodiment of this application;

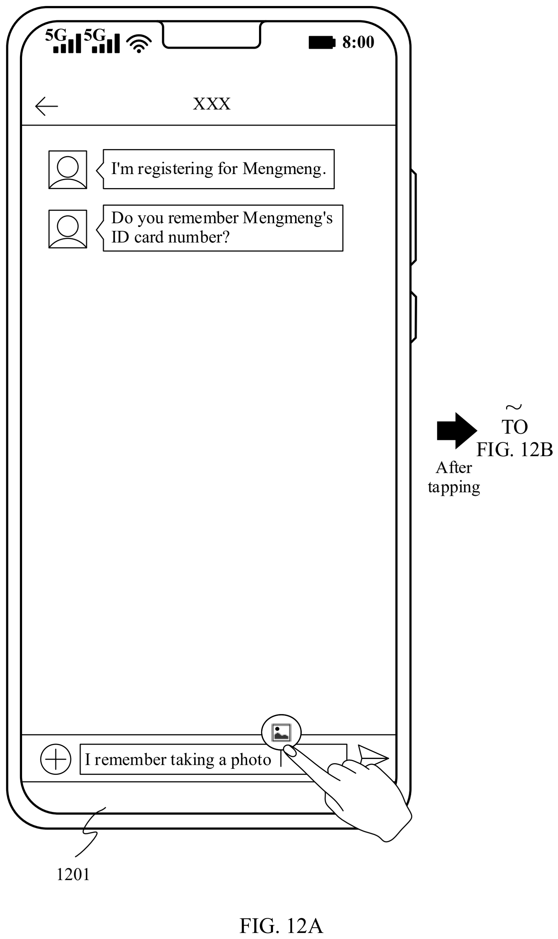

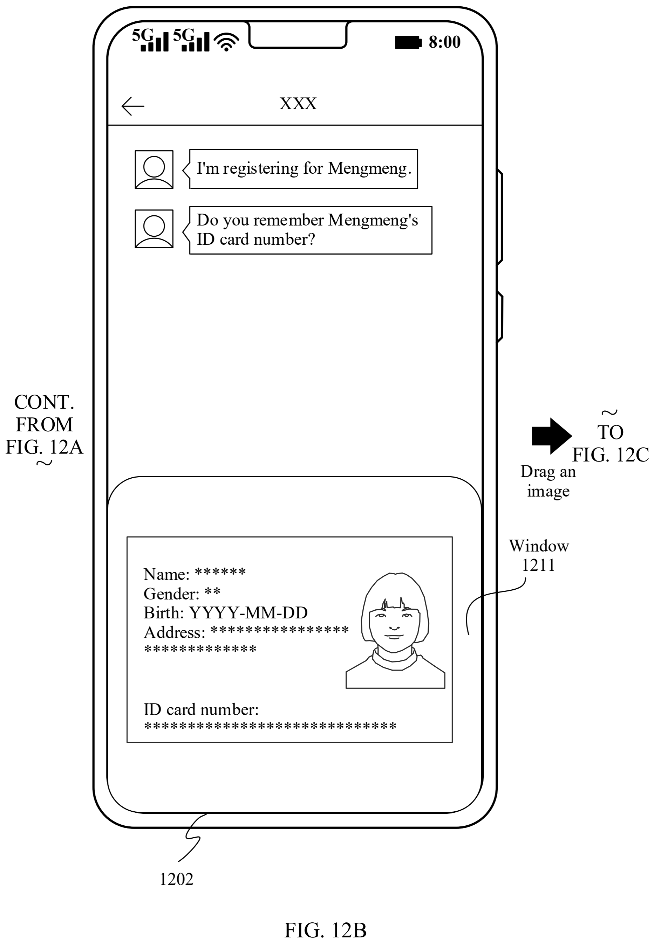

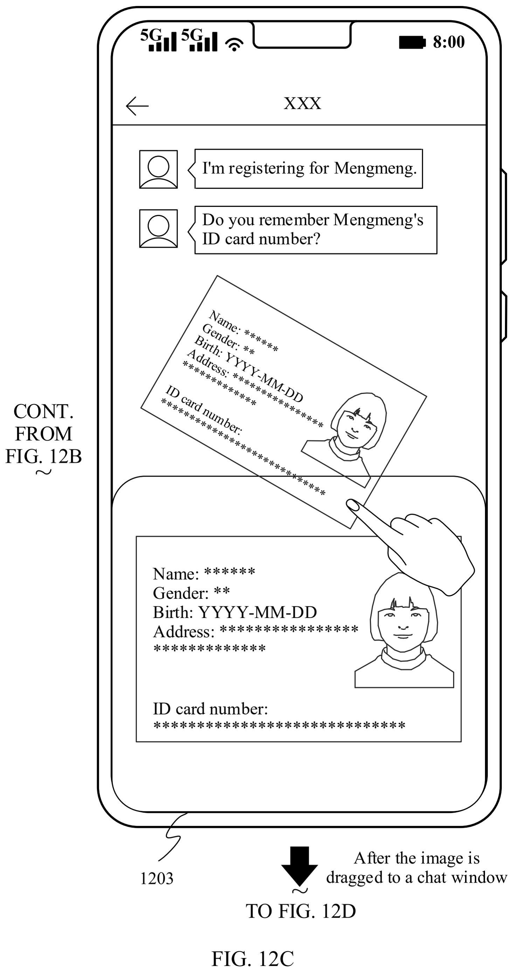

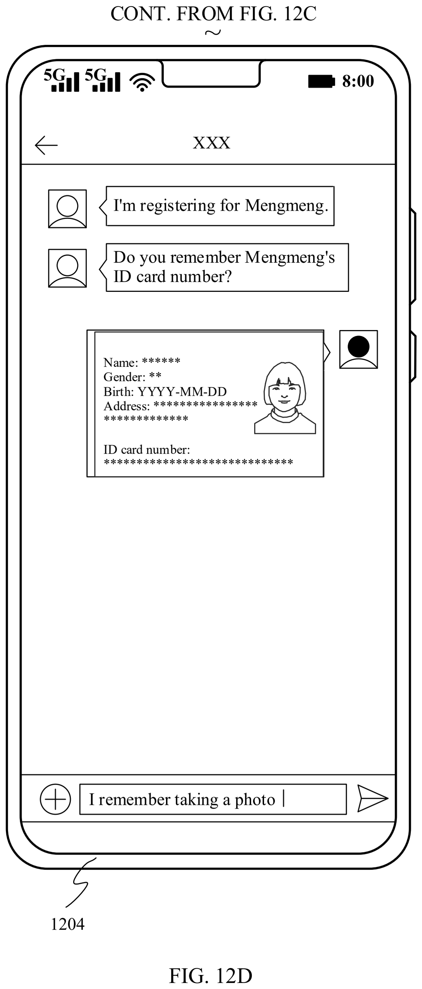

FIG. 12A to FIG. 12D are a diagram of user interfaces for automatically searching for matched media information based on a user input and displaying a search result in another social application scenario according to an embodiment of this application;

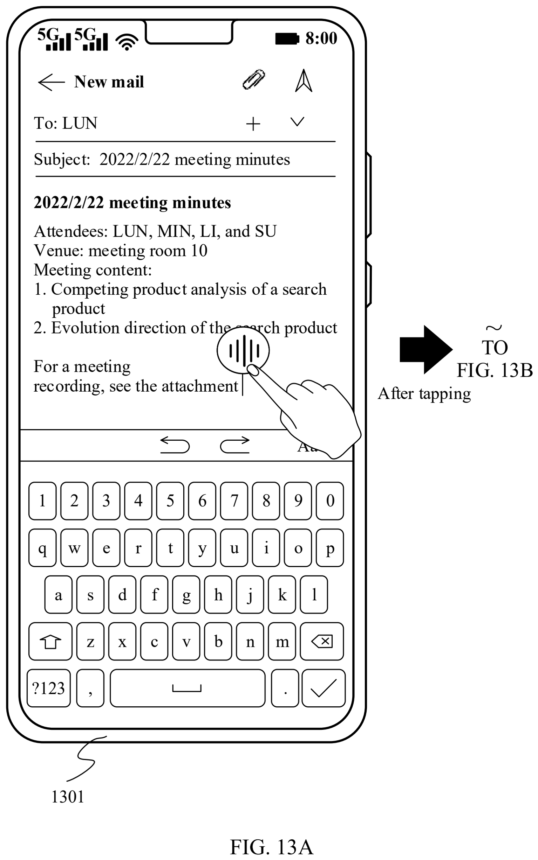

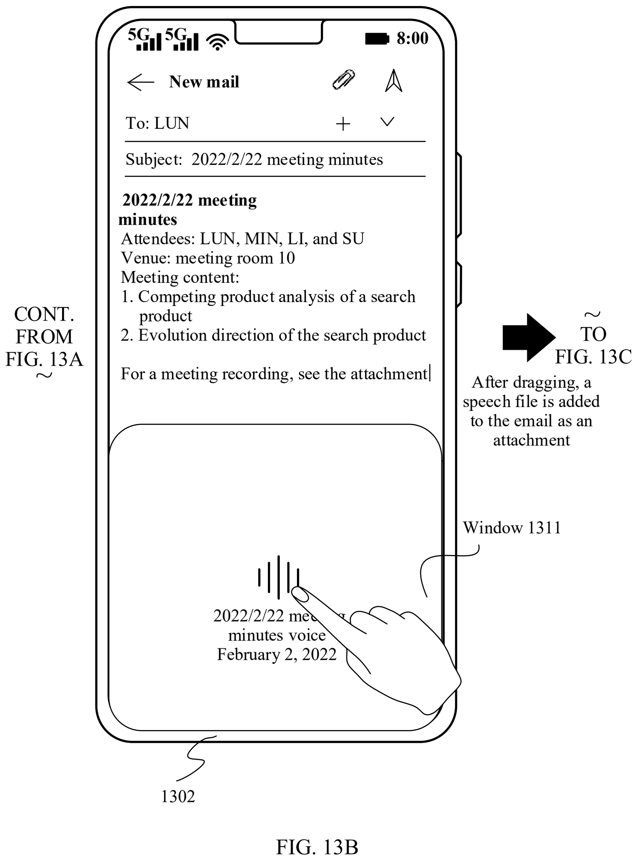

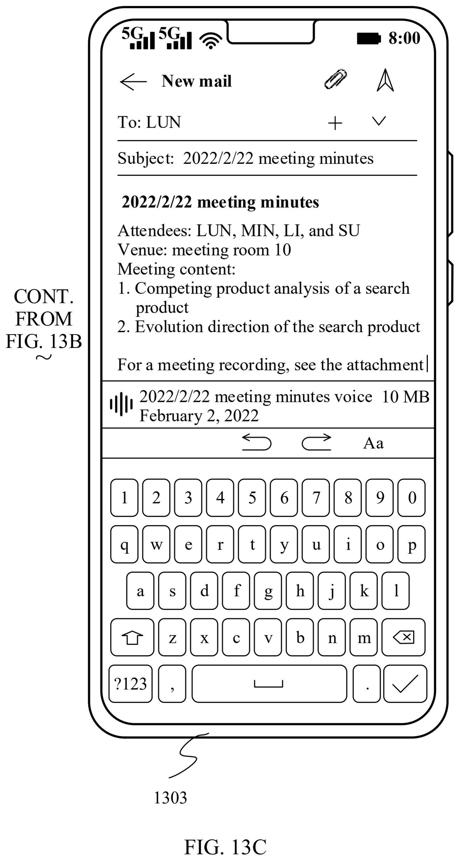

FIG. 13A to FIG. 13C are a diagram of user interfaces for automatically searching for matched media information based on a user input and displaying a search result in an email application scenario according to an embodiment of this application;

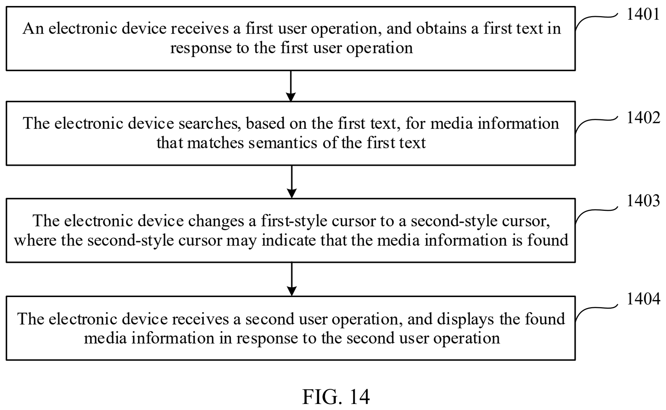

FIG. 14 is a schematic flowchart of an interaction method according to an embodiment of this application;

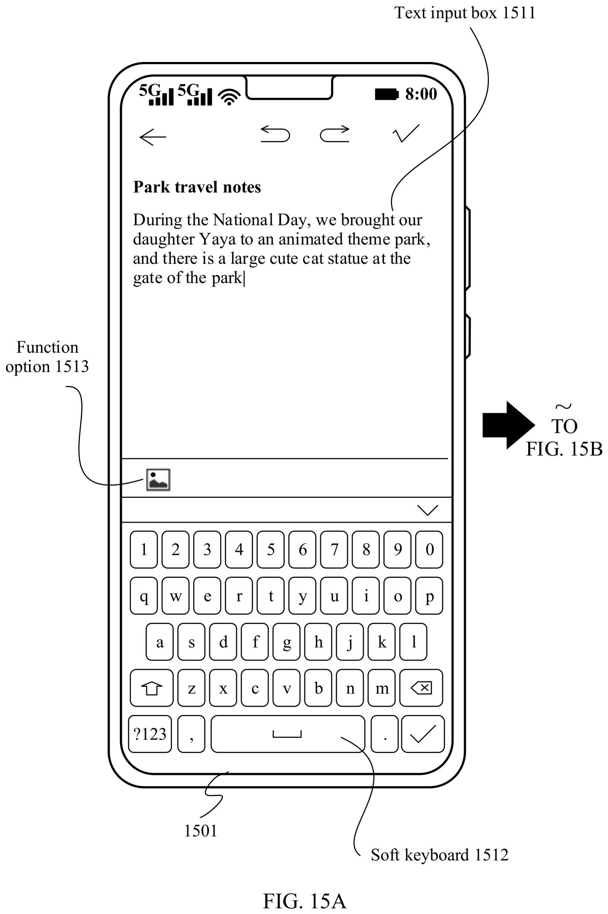

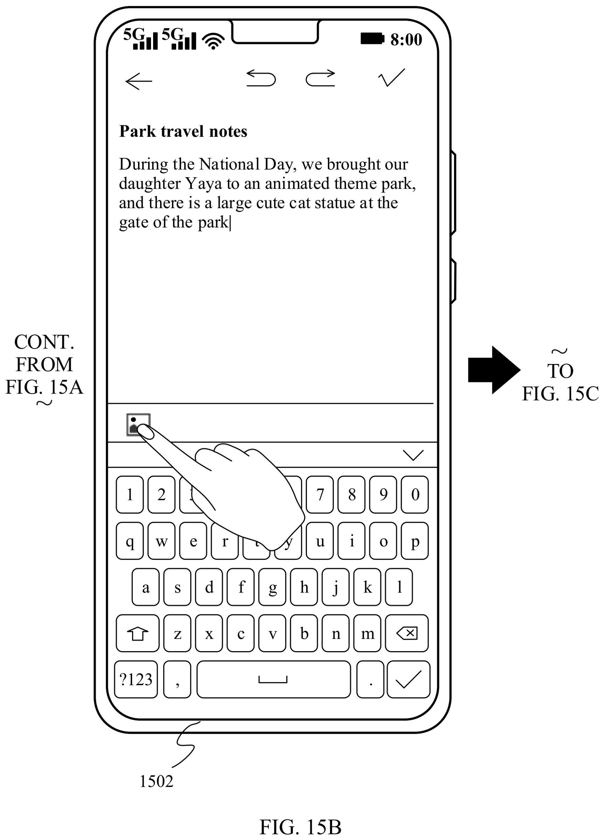

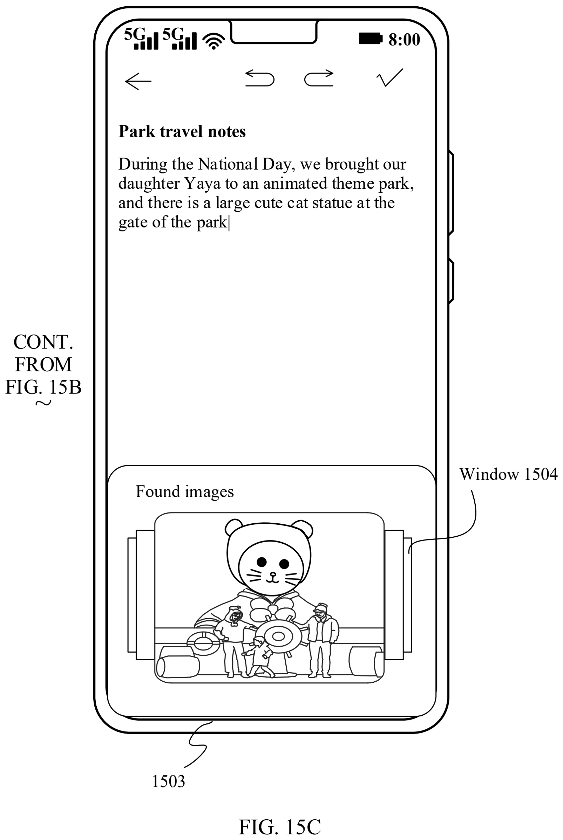

FIG. 15A to FIG. 15C are a diagram of user interfaces for searching for media information of a corresponding type based on a media information type selected by a user and displaying a search result in a memo application scenario according to an embodiment of this application;

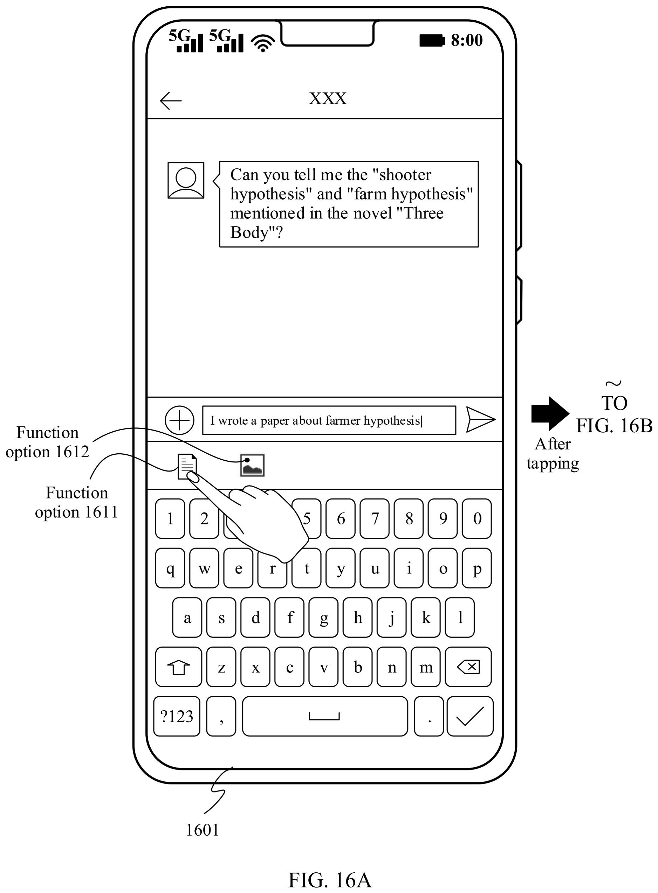

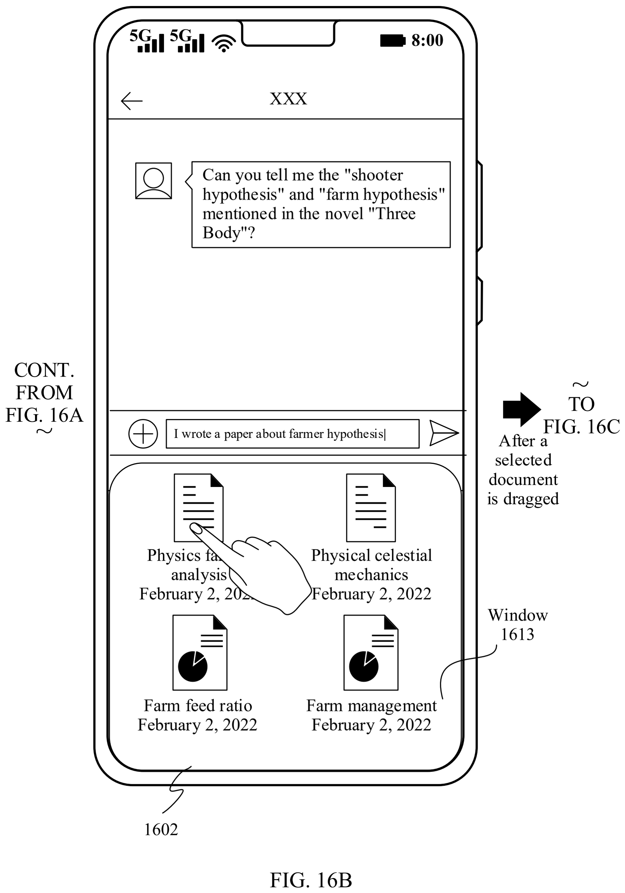

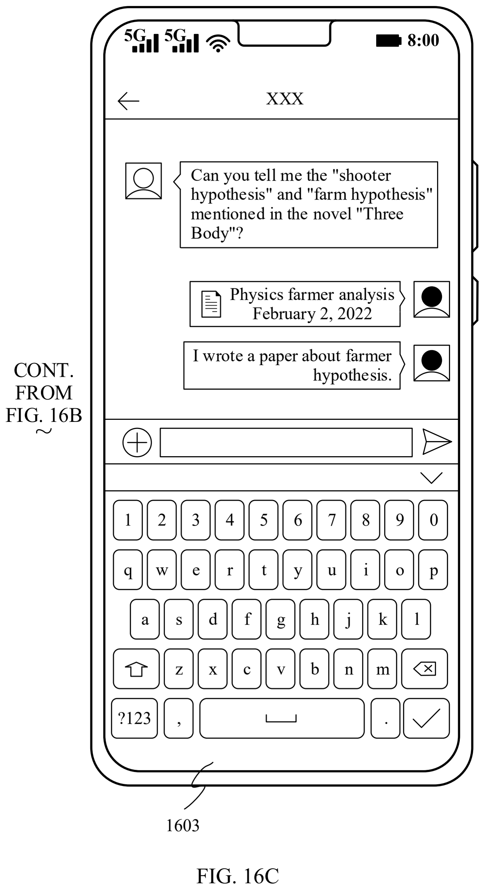

FIG. 16A to FIG. 16C are a diagram of user interfaces for searching for media information of a corresponding type based on a media information type selected by a user and displaying a search result in a social application scenario according to an embodiment of this application;

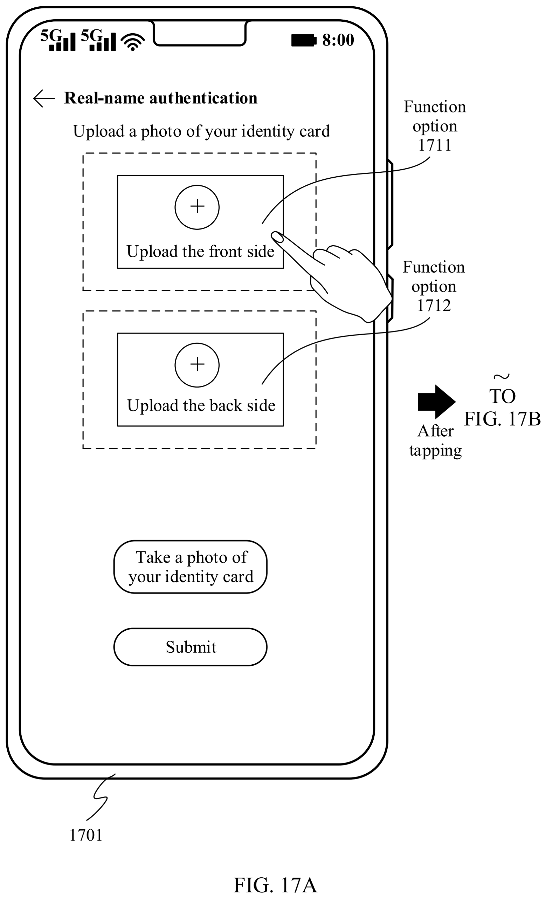

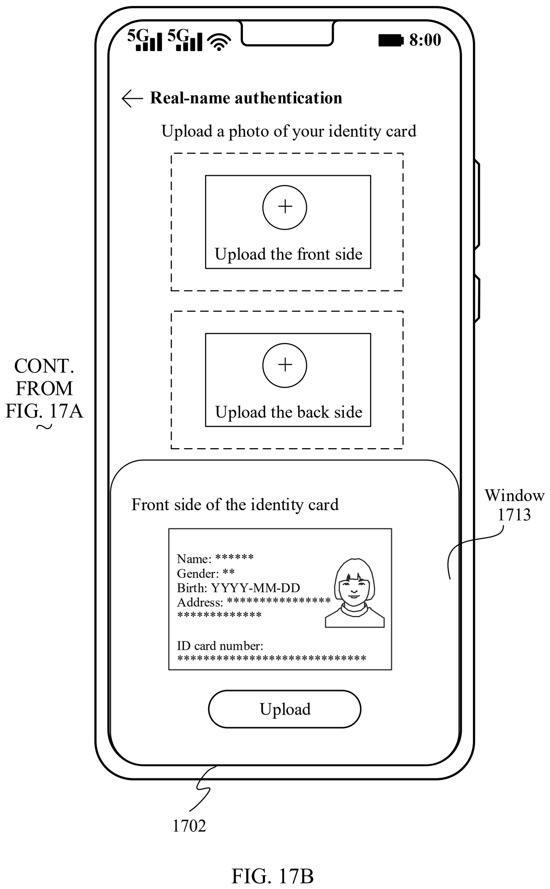

FIG. 17A and FIG. 17B are a diagram of a user interface change process based on a user operation in a scenario of uploading an identity card photo according to an embodiment of this application;

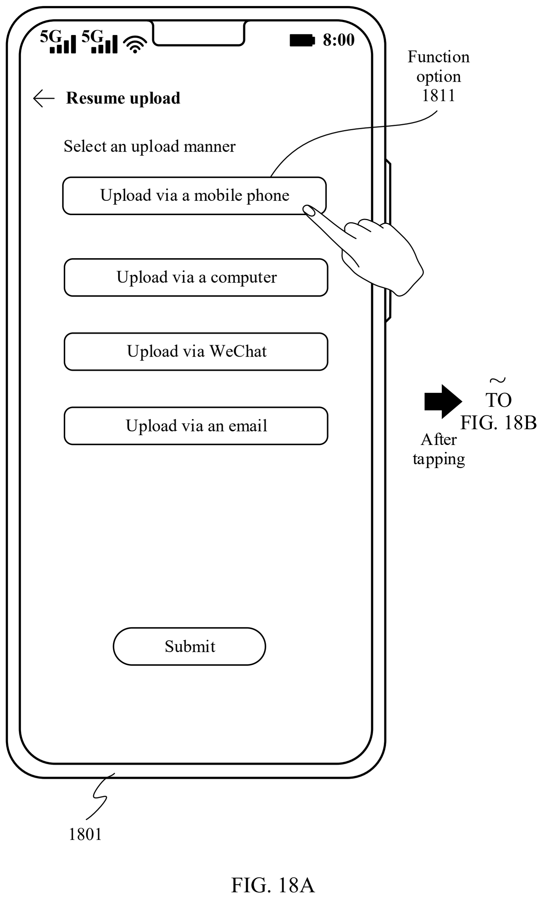

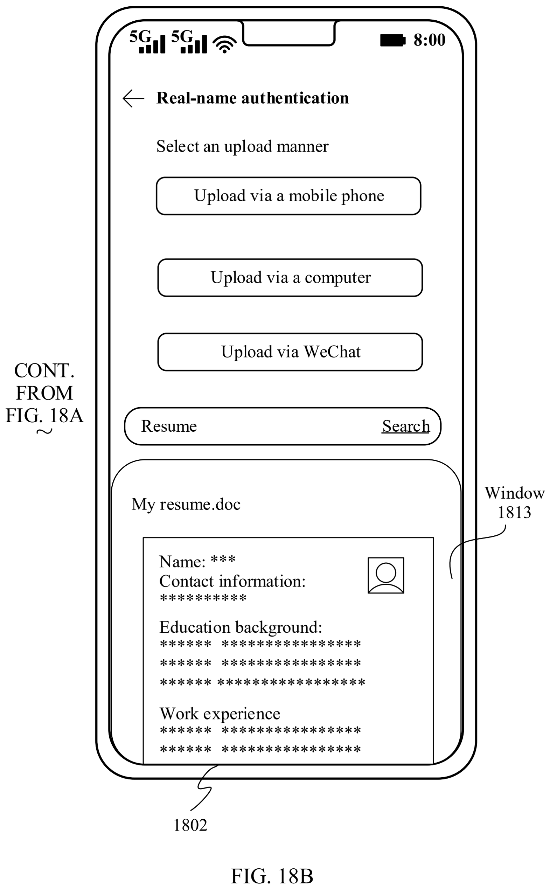

FIG. 18A and FIG. 18B are a diagram of a user interface change process based on a user operation in a scenario of uploading a resume according to an embodiment of this application; and

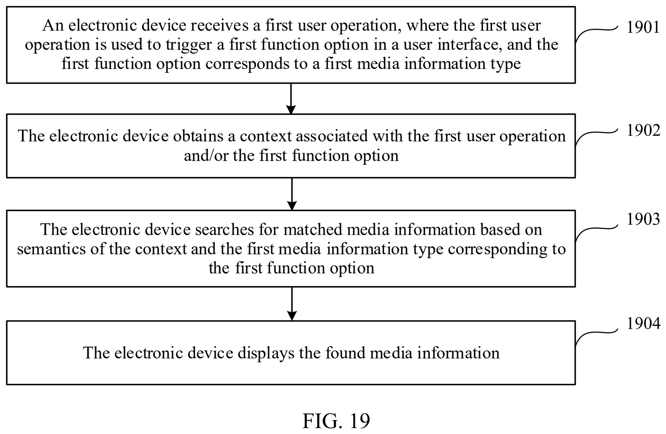

FIG. 19 is a schematic flowchart of another interaction method according to an embodiment of this application.

### DESCRIPTION OF EMBODIMENTS

Embodiments of this application provide a human-computer interaction method that may be applied to an electronic device (for example, a mobile terminal device). Media information that matches input content may be automatically searched for and indicated based on a user input, so that a user can select the media information.

The following clearly and completely describes the technical solutions in embodiments of this application with reference to the accompanying drawings in embodiments of this application. Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms such as "one or more", unless otherwise specified in the context clearly. It should be further understood that, in embodiments of this application, "one or more" indicates one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment, but mean "one or more but not all of embodiments", unless otherwise specifically emphasized in another manner. Terms "include", "contain", "have", and their variants all mean "include but are not limited to", unless otherwise specifically emphasized in another manner.

"A plurality of" in embodiments of this application indicates two or more. It should be noted that in the descriptions of embodiments of this application, terms such as "first" and "second" are merely intended for distinction in description, but should not be construed as indicating or implying relative importance or indicating or implying a sequence.

A method provided in embodiments of this application may be applied to an electronic device. The electronic device may implement human-computer interaction. For example, the electronic device may be an electronic device that may have a human-computer interaction function, for example, a mobile phone, a tablet computer, a wearable device (for example, a watch or a band), a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a smart home device (for example, a smart television or a smart speaker). It may be understood that a specific type of the electronic device is not limited in embodiments of this application.

An example embodiment of an electronic device to which embodiments of this application may be applied may include but is not limited to an electronic device using HarmonyOS^{®}, IOS^{®}, Android^{®}, Microsoft^{®}, or another operating system. Alternatively, the electronic device may be another electronic device, for example, a laptop (Laptop) computer having a touch-sensitive surface (for example, a touch panel).

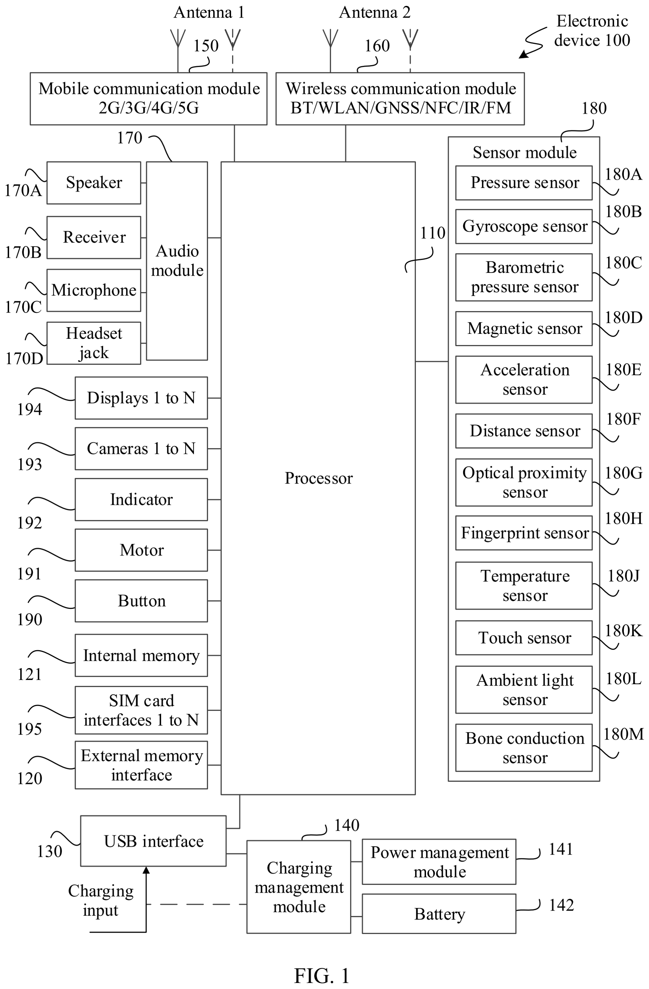

FIG. 1 is a diagram of a possible hardware structure of an electronic device. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache. The memory may store instructions or data just used or cyclically used by the processor 110. When the processor 110 needs to use the instructions or the data again, the processor 110 may directly invoke the instructions or the data from the memory. This avoids repeated access, reduces waiting time of the processor 110, and improves system efficiency.

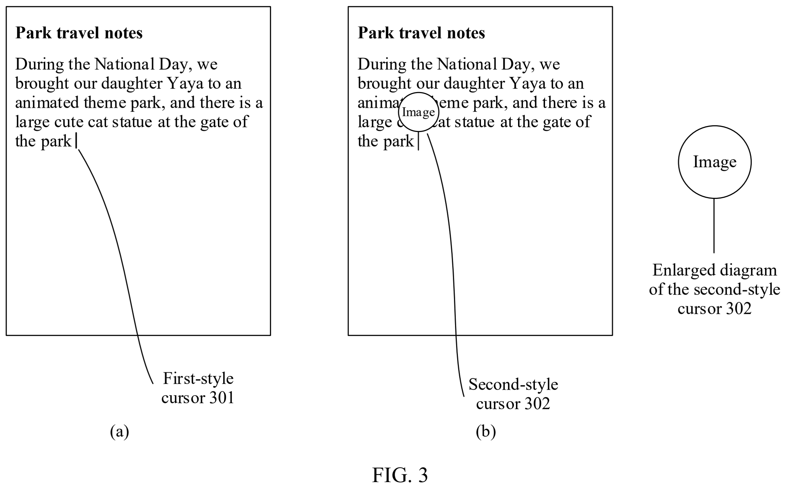

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N (N is a positive integer greater than 1) displays 194. For example, the electronic device 100 may be a mobile phone with a foldable display, and the mobile phone has at least two displays. In embodiments of this application, the display 194 may be configured to display a page (or referred to as an interface) including at least one application widget, for example, an interface 31 or an interface 32 shown in FIG. 3.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application, and the like. The data storage area may store data (for example, an image or a video) generated when the electronic device 100 is used, and the like. In addition, the internal memory 121 may include a high-speed random access memory, or may include a nonvolatile memory, for example, at least one magnetic disk storage device, a flash memory, or a universal flash storage (universal flash storage, UFS).

The touch sensor 180K is also referred to as a "touch panel". The touch sensor 180K may be disposed on the display 194. A touchscreen formed by the touch sensor 180K and the display 194 is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from that of the display 194. In embodiments of this application, the touch sensor 180K may detect a user operation, and may transfer information about the detected user operation to an upper layer, so that the electronic device can add, delete, or update an application widget, or the like in response to the user operation.

It may be understood that the components shown in FIG. 1 do not constitute a specific limitation on the electronic device. The electronic device may further include more or fewer components than those shown in the figure, or some components may be combined, or some components may be split, or different component arrangements may be used. In the following embodiments, the electronic device 100 shown in FIG. 1 is used as an example for description.

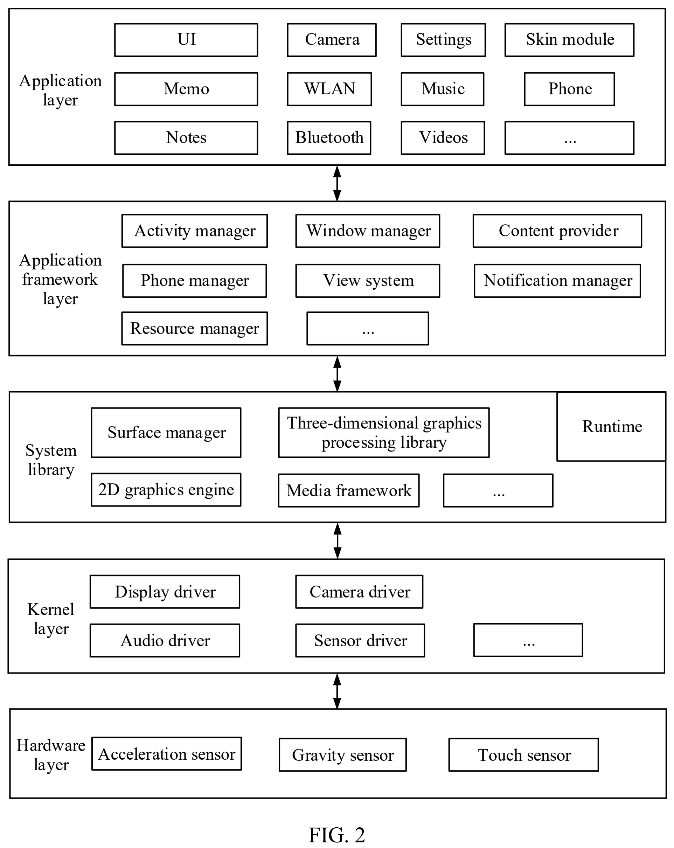

FIG. 2 is a block diagram of a software system architecture of an electronic device according to an embodiment of this application. As shown in FIG. 2, the software system architecture of the electronic device may be a layered architecture. For example, software may be divided into several layers, and each layer has a clear role and task. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 2, the application layer may include Camera, Settings, Skin module, a user interface (user interface, UI), a third-party application, and the like. The third-party application may include a wireless local area network (wireless local area network, WLAN), Music, Phone, Bluetooth, Video, Memo, Notes, and the like.

In a possible implementation, an application may be developed by using a Java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 2, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interaction interface for windows of all programs.

The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, an audio, calls that are made and received, a browsing history and bookmarks, an address book, and the like.

The view system includes a visual control, for example, a control for displaying a text and a control for displaying an image. The view system may be used to construct an application. A display interface may include one or more views. For example, a display interface including an SMS message notification icon may include a text display view and an image display view. In some embodiments of this application, a control for receiving and displaying a text (or text) may further provide, when displaying a text in response to an input operation of a user, the text entered by the user for an application or a service used to implement semantic understanding. In addition, the application or the service may further obtain media information that matches semantics. Optionally, the application may be set at the application layer. For example, the application may be a third-party application. The service may be set at the application framework layer. For example, the service may be a service provided by the operating system. Optionally, the application or the service may be a natural language processing tool driven by using a technology like artificial intelligence or a neural network, and may implement semantic analysis and understanding on a natural language. For example, semantic understanding may be performed on a text entered by the user or a dialog of the user, to extract a keyword. The application or the service may further search for the matched media information based on the keyword, or another application or service may search for the matched media information based on the keyword. A semantic understanding method or technology used by the application or the service and a media information searching manner are not limited in embodiments of this application.

Optionally, from a perspective of a content type, the media information may include one or more of the following: a photo, an audio, a video, a document, a contact address book, contact information, an electronic bill, an electronic card, a service widget, and the like. From a perspective of a data type, the media information may include one or more of the following: an image file, an audio file, a video file, a text file, a PDF file, a file generated by office software (for example, a macrosoft office document or a WPS document), contact data, ticket data, and the like. The media information may further include URL information, for example, a web page URL in a browser favorites folder. The content type or the data type of the media information is not limited in embodiments of this application.

The phone manager is configured to provide a communication function of the electronic device, for example, management of a call status (including answering, hang-up, or the like).

The resource manager provides various resources such as a localized string, an icon, an image, a layout file, and a video file for an application.

The notification manager enables an application to display notification information in the status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application running on a background, or may be a notification that appears on the screen in a form of dialog window. For example, text information is indicated in the status bar, an alert tone is made, the electronic device vibrates, or an indicator blinks.

The runtime includes a core library and a virtual machine. The runtime schedules and manages the operating system. The core library includes two parts: a function that needs to be invoked in Java language, and a core library of the operating system. The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager, a media framework, a three-dimensional graphics processing library (for example, OpenGL ES), and a two-dimensional graphics engine (for example, SGL). The surface manager is configured to manage a display subsystem and provide fusion of two-dimensional and three-dimensional graphics layers for a plurality of applications. The media framework supports playback and recording of audios and videos in a plurality of commonly used formats, static image files, and the like. The media framework may support a plurality of audio and video coding formats such as MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing. In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

It should be understood that the hardware structure of the electronic device may be shown in FIG. 1, and the software system architecture of the electronic device may be shown in FIG. 2. A software program and/or a module corresponding to the software system architecture of the electronic device may be stored in the internal memory 121. The processor 110 may run the software program and the application stored in the internal memory 121, to perform a procedure of the display method provided in embodiments of this application.

In embodiments of this application, after finding, based on the text entered by the user, the media information that matches the semantics of the text, the electronic device may change a style of a cursor, to inform the user that the matched media information is found.

The cursor (cursor) is also referred to as a cursor, and may indicate a text position. When the user is to enter a text in a text box or an application, the cursor may be used to display a position of the text to be entered by the user. Alternatively, a cursor position may be moved forward or backward based on a user operation. Currently, in a user interface of a mobile phone or a tablet computer, a cursor is usually displayed as a short vertical bar, and may blink regularly. In some embodiments of this application, more diversified cursor styles are provided. As the user enters a text (or text), after matched media information is found based on the text (or text) entered by the user, a first-style cursor (for example, a short vertical bar) may be changed to a second-style cursor provided in embodiments of this application, and the user may be informed, by using the second-style cursor, that the media information that matches the entered text (or text) is found.

In the following descriptions of this specification, a cursor that is provided in embodiments of this application and that is used to inform the user that matched media information is found is referred to as a second-style cursor. Correspondingly, a cursor displayed in a normal state or when no matched media information is found is referred to as a first-style cursor. For example, the first-style cursor may be a short vertical bar blinking regularly, or a cursor of another style set by a user by using system settings.

In a possible implementation, compared with the first-style cursor, the second-style cursor may have different shapes, colors, and/or sizes, to inform the user that matched media information is found. Generally, compared with changing a size and/or a color of a cursor, changing a shape of the cursor allows the user to more intuitively and more clearly view a change of a cursor style, so as to determine a next operation. In the following embodiments of this application, an example in which a shape of the second-style cursor is different from that of the first-style cursor is used for description.

An example may be shown in FIG. 3. In (a) in FIG. 3, a first-style cursor 301 in a normal state in a memo text input box is displayed. The first-style cursor 301 is displayed at an end of a text, and is specifically displayed in a shape of a vertical bar. In (b) in FIG. 3, after finding matched media information based on a text entered by a user, an electronic device displays a second-style cursor 302 in the memo text input box. The second-style cursor 302 is displayed at the end of the text. In a possible manner, the second-style cursor may be displayed in a shape of a magnifier, to prompt the user to find, based on text content before the cursor, media information that matches the text content. To better notify the user of the found media information, in a possible implementation, the user may be notified of a type of the found media information by displaying a text prompt in the second-style cursor 302. For example, a text "image" is displayed in the second-style cursor 302 to indicate that media information of a matched image type is found.

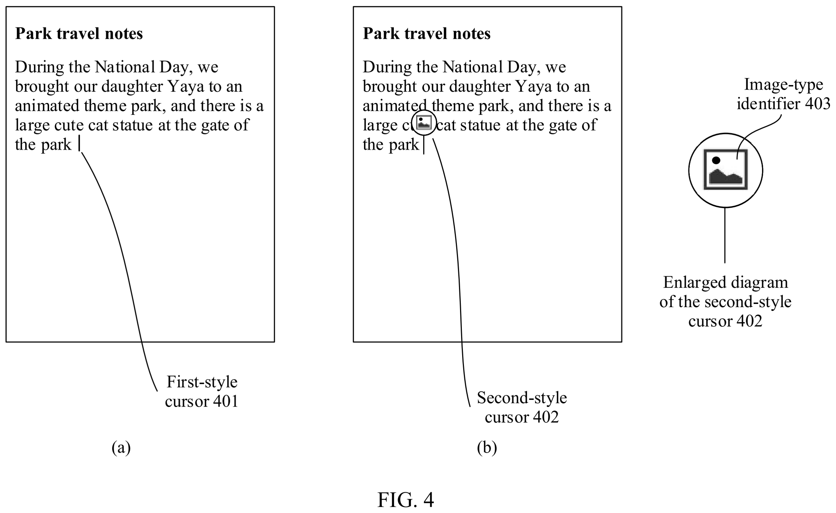

In another possible implementation, an identifier indicating an image may alternatively be displayed in the second-style cursor, to indicate that media information of a matched image type is found. An example may be shown in FIG. 4. In (a) in FIG. 4, a first-style cursor 401 in a normal state in a memo text input box is displayed. The first-style cursor 401 is displayed at an end of a text, and is specifically displayed in a shape of a vertical bar. In (b) in FIG. 4, after finding matched photo based on a text entered by a user, an electronic device displays a second-style cursor 402 in the memo text input box. The second-style cursor 402 is displayed at the end of the text, and is specifically displayed in a shape of a magnifier. An image-type identifier 403 is displayed within a range of a lens of the magnifier, to indicate that media information of an image type is found.

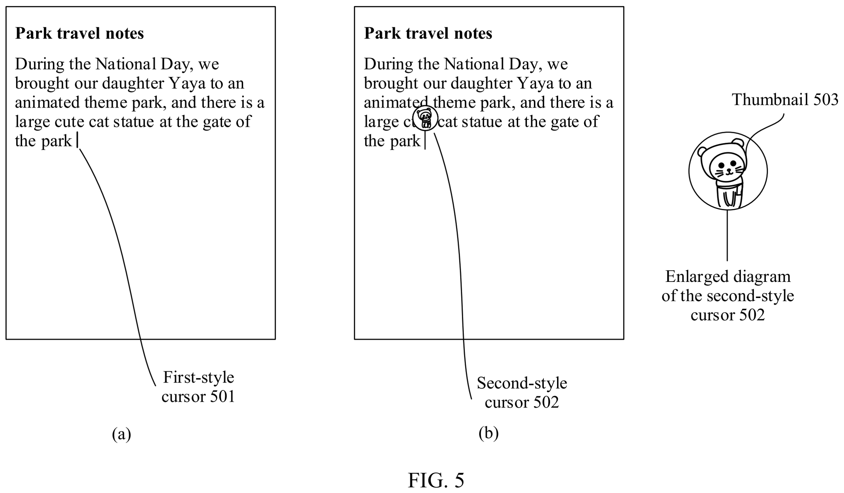

To more intuitively notify the user of the found media information, in still another possible implementation, for found media information of an image or video type, a thumbnail of an image or video frame may be displayed in the second-style cursor. Optionally, a thumbnail of an image with a highest matching degree may be displayed, or a thumbnail of a video frame (for example, a first frame) in a video with a highest matching degree may be displayed. An example may be shown in FIG. 5. In (a) in FIG. 5, a first-style cursor 501 in a normal state in a memo text input box is displayed. The first-style cursor 501 is displayed at an end of a currently entered text, and is specifically displayed in a shape of a vertical bar. In (b) in FIG. 5, after finding a matched image and/or video based on a text entered by a user, an electronic device displays a second-style cursor 502 in the memo text input box. A type of found media information and content of the found media information may be indicated to the user by displaying an image thumbnail or a video frame thumbnail in the second-style cursor 502. In (b) in FIG. 5, an example in which an image is found is used. In the second-style cursor 502 in a shape of a magnifier, a thumbnail 503 of an image with a highest matching degree is displayed within a range of a lens of the magnifier, to indicate the content of the found media information.

Based on the foregoing example, it may be understood that the second-style cursor may indicate the type and/or content of the found media information. For example, the second-style cursor includes one or more of the following: a thumbnail or a partial image of the content of the media information; and indication information of a media type, where the indication information of the media type includes an icon indicating the type of media information, and a text indicating the type of the media information.

It may be understood that the foregoing merely shows several possible forms of the second-style cursor as examples. This is not limited in embodiments of this application. For example, the second-style cursor may alternatively include partial content in a found image.

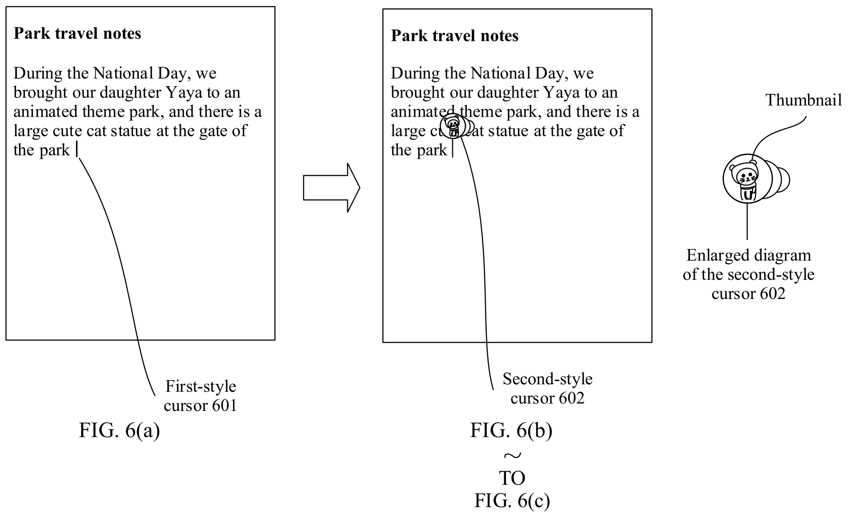

When a plurality of types of media information are found, to inform the user that the plurality of types of media information are found, in a possible implementation, a text prompt (indicating that the plurality of types of media information are found) or a specific identifier (for example, including an icon indicating that the plurality of types of media information are found) may be displayed in the second-style cursor, or a cursor shape or another form may be used, to inform the user that the plurality of types of media information are found. An example may be shown in FIG. 6(a) to FIG. 6(d). In FIG. 6(a), a first-style cursor 601 in a normal state in a memo text input box is displayed. The first-style cursor 601 is displayed at an end of a currently entered text, and is specifically displayed in a shape of a vertical bar. In FIG. 6(b), after finding the plurality of types of matched media information based on a text entered by a user, an electronic device displays a second-style cursor 602 in the memo text input box. For example, three types of media information: an image, a video, and a document (for example, a word file) are found. The second-style cursor 602 may be displayed in a form in which three magnifiers are stacked together, to inform the user that the three types of media information are found. Optionally, the magnifier at the top layer may display related information (for example, a thumbnail, a text prompt, or an icon) of media information that has a highest degree of matching with text semantics. Optionally, the magnifier at the top layer may further display, based on a user behavior habit, related information of media information that matches the user behavior habit. For example, as shown in FIG. 6(b), because a frequency of viewing a photo or browsing an image library by the user is higher than a frequency of viewing a video and a word file, a thumbnail of a found image may be displayed in the magnifier at the top layer.

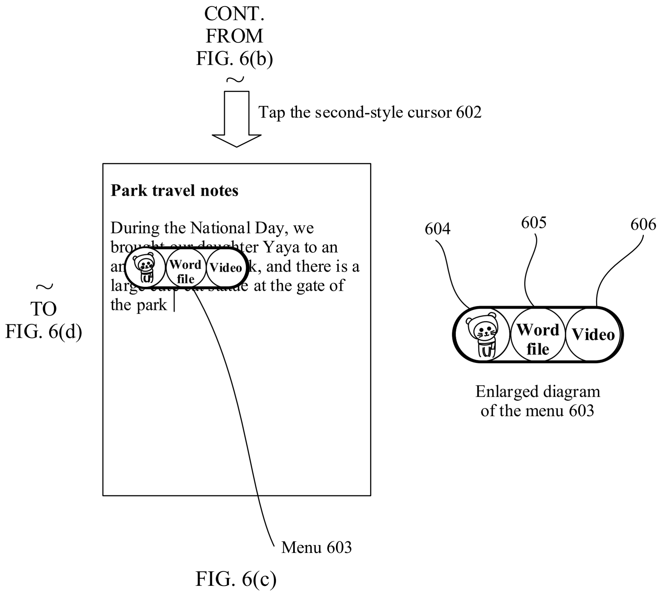

As shown in FIG. 6(c), after the user triggers the second-style cursor 602 by using a tap operation or another user operation (for example, touching and holding or double-tapping), a menu 603 is displayed as a response, to better notify the user of a type of the found media information. For the three types of media information that are found, the menu 603 includes three corresponding function options (for example, function options 604, 605, and 606 shown in the figure), and each function option corresponds to a search result of one type of media information. The user may select a function option in the menu 603 (for example, tap a function option), so that a type of found media information corresponding to the function option may be displayed. For example, after the user taps the function option 604 in the menu 603, a found image may be displayed in a pop-up window. As shown in FIG. 6(c), the function options 604, 605, and 606 may indicate, by using a thumbnail, a text prompt, or the like, types and/or content of media information corresponding to the corresponding function options. For example, refer to the embodiments shown in FIG. 3 to FIG. 5. The function option may include one or more of the following: a thumbnail or a partial image of the content of the media information; and indication information of a media type, where the indication information of the media type includes an icon indicating the type of media information, and a text indicating the type of the media information. For example, the function option 604 indicates, by using an image thumbnail, that a found image may be displayed by triggering the function option, and the function option 605 indicates, by using a text prompt, that a found word file may be displayed by triggering the option.

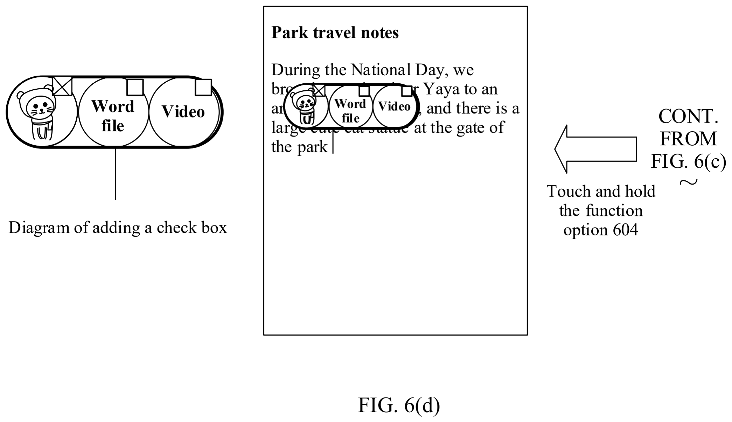

Optionally, a plurality of (including two or more) media information types may be selected based on the menu 603, so that media information of a corresponding type can be viewed. FIG. 6(c) is used as an example. After the user touches and holds the function option 604, check boxes may be separately displayed in positions such as the front, the rear, the upper right corner, or the upper left corner of the function options 604, 605, and 606, so that the user selects a media information type corresponding to one or more of the function options 604, 605, and 606. In FIG. 6(d), an example in which the check box is displayed in the upper right corner is used. After the user touches and holds the function option 604, check boxes may be displayed in the upper right corners of the function options 604, 605, and 606. The check box in the upper right corner of the function option 604 is in a selected state, and the check boxes of the other two function options are in an unselected state. When the user selects, by using the check box, a media information type that needs to be viewed, and then taps an "OK" button, the electronic device displays, as a response, a list of found media information of a corresponding type. It may be understood that a check function of a plurality of options may alternatively be implemented in another manner. This is not limited in embodiments of this application.

Optionally, the menu 603 may further include a function option indicating to view all types of media information. After the function option is triggered (for example, after the user taps the function option), all the types of media information may be displayed. Optionally, different types of media information may be classified and displayed based on the types of the media information. For example, an image list, a word file list, and a video list may be displayed.

In another possible implementation in the scenario shown in FIG. 6(a) to FIG. 6(d), different from the user operation of touching and holding the displayed menu 603 to view all the types of the found media information, after the user taps or double-tapes the second-style cursor 602, all the types of the found media information may be directly displayed based on the types of the media information.

It may be understood that the foregoing provides only several examples of implementations of performing a user operation on the second-style cursor to browse the found media information. This is not limited in embodiments of this application.

Optionally, after a plurality of types of media information are found, in an alternative solution of the scenario shown in FIG. 6(a) to FIG. 6(d), the first-style cursor 601 may alternatively be directly changed to a cursor form shown in FIG. 6(c). In other words, all types of found media information may be directly indicated in a changed cursor, so that user operations can be further reduced.

It may be understood that the second-style cursor is merely several possible examples. Attributes such as a shape, a size, and a color of the second-style cursor are not limited in embodiments of this application. FIG. 5 is used as an example. The second-style cursor may alternatively be displayed in a form obtained after the second-style cursor 502 is rotated by 180. In this way, the second-style cursor can be prevented from blocking the entered text as much as possible.

The following separately uses a memo application scenario, a social application scenario, and an email application scenario as examples to describe a user operation and a user interface change in an interaction process implemented in embodiments of this application.

First, a memo application is used as an example to describe a user interface change process based on a user operation during implementation of embodiments of this application.

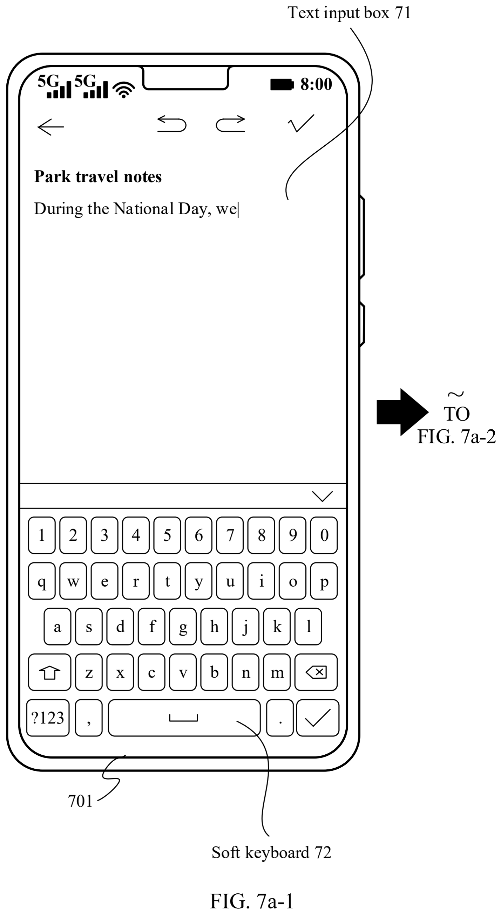

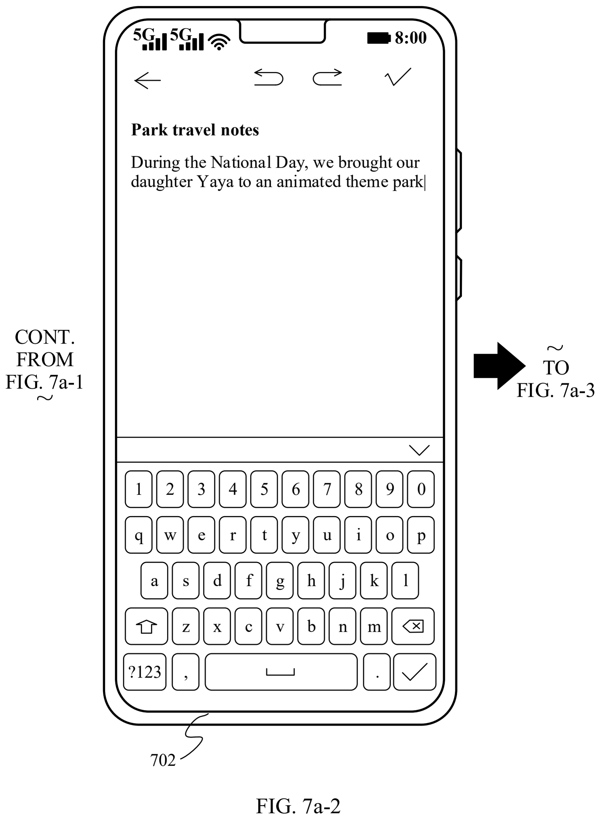

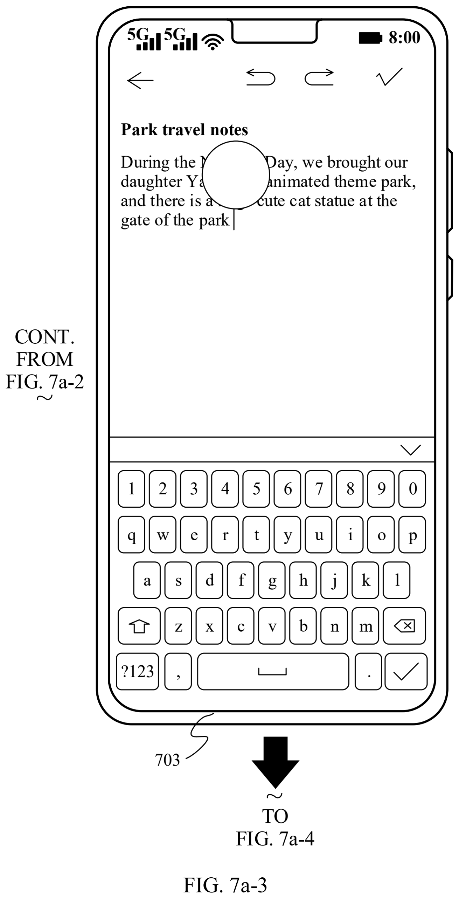

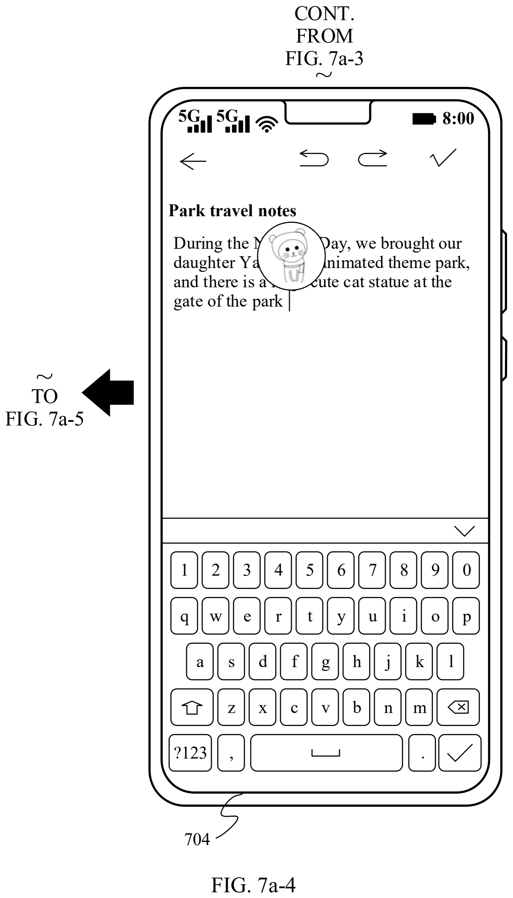

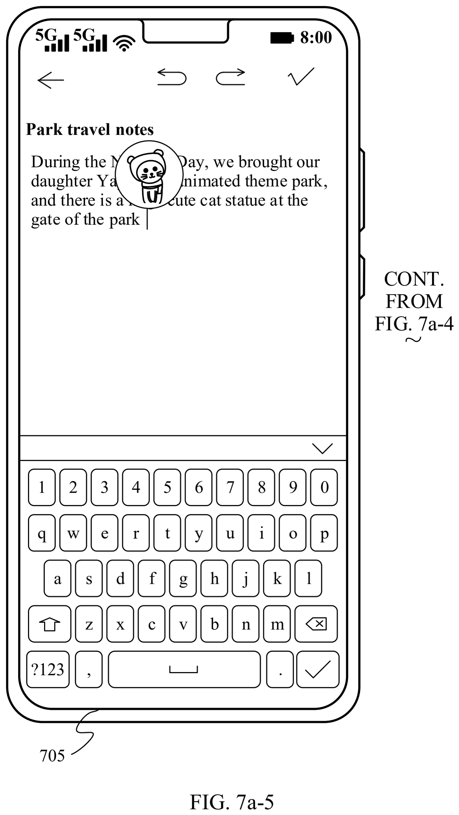

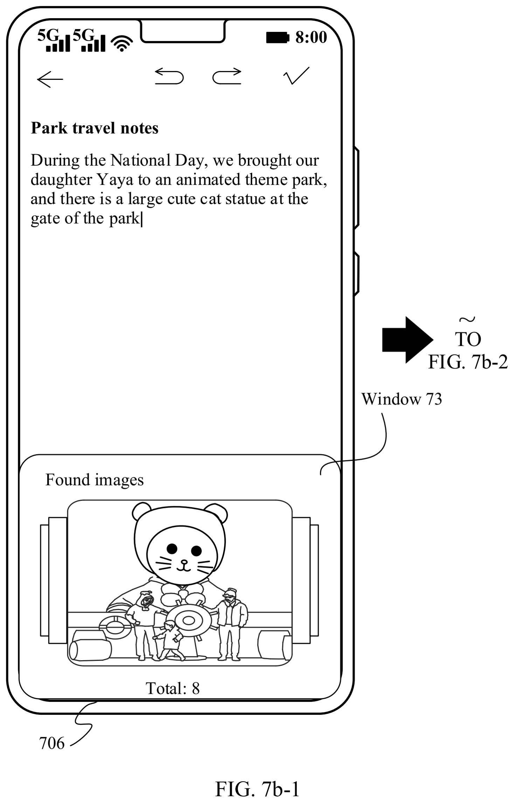

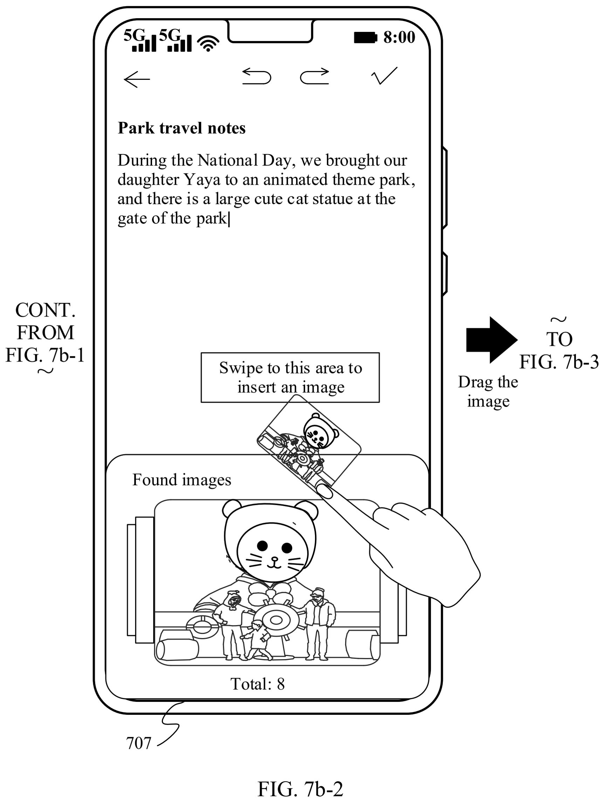

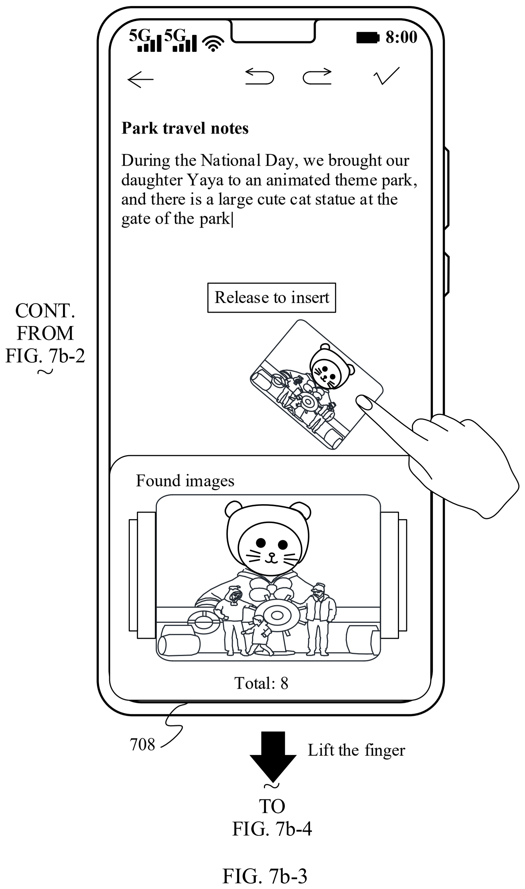

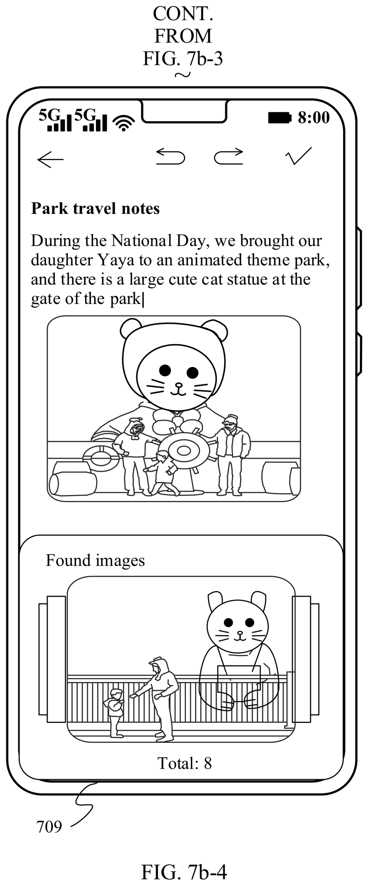

FIG. 7a-1 to FIG. 7b-4 are diagrams of user interfaces in which a mobile phone is used as an example to automatically search for matched media information based on a user input and display a search result in a memo application scenario according to an embodiment of this application.

As shown in FIG. 7a-1 to FIG. 7a-5, an interface of a memo application includes a text input box 71 and a soft keyboard 72. A user may enter a text in the text input box 71 by using the soft keyboard 72. Refer to a user interface 701 to a user interface 703 in FIG. 7a-1 to FIG. 7a-5. The user continuously enters a paragraph of texts "During the National Day, we brought our daughter Yaya to an animated theme park, and there is a large cute cat statue at the gate of the park" in the text input box 71 by using the soft keyboard 72. Based on the foregoing text content, the mobile phone may obtain keywords "National Day", "Yaya", and "animated theme park" through semantic understanding, and the mobile phone finds, based on the keywords, a plurality of photos that match the keywords. For example, the mobile phone may search for, based on the keyword "National Day", a photo shot during the "National Day" holiday, search for, based on the keyword "Yaya", a photo that includes an avatar of Yaya, and search for, based on the keyword "animated theme park", a photo shot in the animated theme park or a photo that includes an animated theme element (for example, an animated character image and/or an animated building).

Refer to the user interface 703 to a user interface 705 in FIG. 7a-1 to FIG. 7a-5. Because the mobile phone finds a photo that matches the entered text, a first-style cursor (a vertical bar shown inFIG. 7a-1 to FIG. 7a-5) is changed to a second-style cursor (a cursor in a shape of a magnifier shown inFIG. 7a-1 to FIG. 7a-5). To improve user experience, an animation effect may be used for display in a cursor style change process. An animation effect of a cursor style change shown in FIG. 7a-1 to FIG. 7a-5 is as follows: In the user interface 703, a cursor changes from a vertical bar to a shape of a magnifier. In the user interface 704 and the user interface 705, in a lens area of the magnifier, a thumbnail of a photo that best matches a keyword gradually changes from being blurred to being clear.

Refer to a user interface 706 in FIG. 7b-1 to FIG. 7b-4. After the user taps the second-style cursor in the user interface 705, a window 73 may pop up. In this case, the second-style cursor may be restored to the first-style cursor, indicating that semantic understanding and related media information searching are completed once. The window 73 may cover an upper layer of a soft keyboard window, so that the text input box 71 is not covered or is not completely covered. Found images may be displayed in the window 73. If a plurality of photos are found, the plurality of found photos may be displayed in an image stacking manner, and the user may select a photo by using an operation like swiping left or right. Optionally, a photo displayed by default may be a photo that best matches semantics of the text. Optionally, a total quantity of found photos may be further displayed in the window 73, to help the user learn of a search result and perform selection. In another possible implementation, the found photos may be arranged in a form of list (list) or grid (grid) in descending order of matching degrees. Further, if a large quantity of photos are found, a slider bar may be provided to allow the user to swipe up and down on the slider bar to browse the found photos.

Refer to a user interface 707 and a user interface 708 in FIG. 7b-1 to FIG. 7b-4. After selecting a photo in the window 73, the user may drag the photo to the text input box 71 by using a drag operation. Optionally, in an operation process of the user, prompt information may be further displayed in the user interface to guide the user to perform an operation, for example, prompt information "Swipe to this area to insert an image" shown in the user interface 707 and prompt information "Release to insert" shown in the user interface 708. Refer to a user interface 709. After the selected photo is dragged to the text input box 71 and the finger is lifted, the photo may be automatically added to a position of the first-style cursor. The selected photo may be inserted into a position of a cursor by using the foregoing drag operation. Optionally, after a found photo is added to the text by using the drag operation, the window 73 may display a next photo with a secondary highest matching degree. Similar to the foregoing operation of adding the photo to the text, the mobile phone may sequentially add a plurality of photos to the text based on a drag operation of the user.

In some embodiments of this application, text content corresponding to a search result may be further highlighted, so that the user learns of specific text content that matches currently found media information. In a possible implementation, after matched media information is found based on the text (or text) entered by the user, corresponding text (or text) content may be further highlighted when a cursor style is changed. In another possible implementation, after the user triggers the second-style cursor through tapping or by using another operation, corresponding text content may be further highlighted when the search result is displayed. Optionally, an implementation of highlighting the corresponding text content may include but is not limited to: displaying the corresponding text content in different font colors, or displaying the corresponding text content in different font styles (or referred to as font shapes), or displaying the corresponding text content through highlighting, or displaying the corresponding text content through highlighted display (for example, fonts are bolded), or highlighting the corresponding text content by combining the foregoing plurality of manners.

For example, as shown in FIG. 8A and FIG. 8B, in a user interface 801, a matched video is found based on highlighted text content (for example, a paragraph starting with "3:00 p.m." shown in the figure) in a text input box. Therefore, a first-style cursor is changed to a second-style cursor. If a video-type identifier is displayed in the second-style cursor, the matched video is found based on the highlighted text content. Refer to a user interface 802. When a user taps another position in the paragraph, the second-style cursor moves to the position tapped by the user. Because the video search result is found based on the text content, when the cursor is moved within the text range, a new search process is not triggered, and a current cursor style is not changed. Further, the paragraph may remain highlighted. The user may add a found video in a current position of the cursor. Optionally, an operation of adding a video may be similar to the operation of adding an image shown in FIG. 7b-1 to FIG. 7b-4.

In some embodiments of this application, on a basis of highlighting the text content corresponding to the search result, the user may reduce the highlighted text content or increase the highlighted text content through double-tapping or by using another operation. Because the highlighted text content changes, a new search process may be triggered, and the search result may change. Correspondingly, the cursor style may change accordingly.

An example may be shown in FIG. 9A to FIG. 9E. In a scenario, in a user interface 901, a mobile phone finds a matched video based on highlighted text content, and a second-style cursor includes a video-type identifier, indicating that the matched video is found. Refer to a user interface 902. After a user double-taps a position 1 in the user interface 901, a statement (which may be segmented by using a punctuation mark, for example, "At 3:00 p.m., the flower car tour begins," in the figure) in the position 1 is no longer highlighted. For other highlighted text content, the mobile phone performs searching again, and a search result remains unchanged. Therefore, a cursor style also remains unchanged. It may be understood that this example is described by using an example in which searching is performed again based on an updated highlighted text and a search result remains unchanged. In another scenario, because the highlighted text content is reduced by using a user operation, when searching is performed again based on changed text content, a search result obtained through searching again may change due to a semantic change or a reduction of a search keyword. If a type of media information obtained through searching again is changed, for example, the type is changed, a new type is added, or an original type is removed, the second-style cursor changes accordingly to match a new search result.

Refer to a user interface 903. In another scenario, after the user double-taps a position 2 in the user interface 901, a statement (which may be segmented by using a punctuation mark, for example, "Yaya takes a dozen group photos with the cute cat" in the figure) in the position 2 is highlighted. Refer to a user interface 904. The mobile phone performs searching again for currently highlighted text content, and a search result includes a matched video and image. In comparison with the highlighted text content in the user interface 901, semantics changes, and search keywords (for example, the cute cat and the group photo) are added. As a result, the search result changes, and the cursor style changes accordingly. As shown in the user interface 904 in FIG. 9A to FIG. 9E, the changed cursor includes a video-type identifier and an image-type identifier, and the changed cursor may indicate that two types of media information are found. The user may browse a search result of a corresponding type by using the method in the embodiment shown in FIG. 6(a) to FIG. 6(d) (for example, by tapping an identifier of one of the types).

In the foregoing process, an implementation of selecting a statement in a position of a user operation through segmenting by using a punctuation mark is merely an example. An implementation of selecting text content based on a user operation is not limited in embodiments of this application. For example, in another example, text content between a position of a "press" action and a position of a "lift" action may be selected based on a "press-swipe-lift" operation performed by a finger of the user. In another example, association may be performed based on a text randomly selected by the user, to select the text content.

In some embodiments of this application, after media information that matches semantics of a text entered by the user is found, a search keyword may be further displayed. In some other embodiments, when the found media information is displayed after the second-style cursor is triggered, the search keyword may be displayed. For example, as shown in FIG. 10A to FIG. 10D, in a user interface 1001, after a second-style cursor is tapped, a found image is displayed, and a search box 1010 is displayed. A search keyword corresponding to a current search result is displayed in the search box 1010. For example, a currently found image is found based on keywords "National Day", "Yaya", and "cute cat". Therefore, the foregoing search keywords are displayed in the search box by default.

In some embodiments of this application, the user may be further allowed to change the search keyword, so that searching can be performed again based on a requirement of the user. For example, as shown in FIG. 10A to FIG. 10D, as the user enters a text in a text input box of Memo, after finding a matched image based on the text entered by the user, the mobile phone changes the first-style cursor to the second-style cursor. Refer to the user interface 1001. After the user triggers the second-style cursor, a window for displaying a search result may be displayed at an upper layer of a soft keyboard window. A found image and the search box 1010 are both displayed in the window. The search box 1010 displays, by default, search keywords (for example, "National Day", "Yaya", and "cute cat" shown in the figure) corresponding to search results. The search box further includes a command button (for example, a "Search" button shown in the figure) for triggering a search operation. Refer to a user interface 1002. After the user taps a text input part in the search box 1010, optionally, a full screen may be pulled up to display a search result corresponding to the search box 1010, and a soft keyboard may be further displayed, so that the user can change the search keyword in the search box 1010 by using the soft keyboard.

The user may update a search keyword displayed in the search box 1010 by default. For example, the user may enter a new search keyword, or may delete a part of the search keywords, or may enter a new keyword after deleting a part of the search keywords, or may enter a new keyword after deleting all search keywords displayed in the search box 1010 by default. Refer to the user interface 1002. In this example, "National Day" and "cute cat" in the search box 1010 are deleted, and an updated search keyword is "Yaya". Refer to a user interface 1003. After the user taps the "Search" command button, the mobile phone searches for matched media information based on the updated search keyword. Optionally, after the media information that matches the updated search keyword is found, a full-screen search interface may be exited, and an input interface of Memo is returned. Refer to a user interface 1004. The media information that matches the updated search keyword may be displayed. Optionally, the user may select found media information, and add selected media information to a current position of a cursor in the text input box of Memo.

The following uses a social application as an example to describe a user interface change in an interaction process implemented in embodiments of this application.

FIG. 11A to FIG. 11C are a diagram of user interfaces in which a mobile phone is used as an example to automatically search for matched media information based on a user input and display a search result in a social application scenario according to an embodiment of this application.

As shown in FIG. 11A to FIG. 11C, in a user interface 1101 of a social application, as a user enters a text in an input box 1111, the mobile phone may perform semantic understanding on the text entered by the user, or perform, based on a context, semantic understanding on the text entered by the user, and search for media information based on a semantic understanding result. The context may include chat content that is sent by a peer user and received by the mobile phone, for example, a chat record sent by the peer user in FIG. 11A to FIG. 11C. After a matched document is found, a cursor is changed to a second-style cursor 1112, and a document-type identifier is displayed in the cursor, to indicate that the matched document is found. Refer to a user interface 1102. After the user taps the second-style cursor 1112, a window 1115 is displayed. A size of the window may be less than a full-screen size. For example, the window may cover an upper layer of a soft keyboard window. A plurality of found documents may be displayed in the window 1115, and the plurality of documents may be sorted in descending order of matching degrees and/or based on file types. The user may select a document and send the document to a chat window. Optionally, if the user is allowed to send media information by dragging the media information to the chat window, a text input box and a related button (for example, an additional function button 1113) may not be displayed in the user interface 1102. Refer to a user interface 1103. After the selected document is dragged to a target position and is released, the document is sent, or the document and the text entered by the user in the text input box 1111 are simultaneously sent.

In a possible implementation, in the embodiment shown in FIG. 11A to FIG. 11C, the user may not need to enter any content in the input box. When an input focus is located in the input box (that is, the cursor is displayed in the input box), the mobile phone may perform semantic understanding on the context, and search for media information based on a semantic understanding result. The context may be a previous chat record of the user. It may be understood that no content may be entered in the input box in this case. Similarly, after a matched document is found, the cursor may change to the second-style cursor 1112, and the user may obtain the found media information by using the second-style cursor 1112.

FIG. 12A to FIG. 12D are a diagram of user interfaces in which a mobile phone is used as an example to automatically search for matched media information based on a user input and display a search result in another social application scenario according to an embodiment of this application.

As shown in FIG. 12A to FIG. 12D, in a user interface 1201 of a social application, the mobile phone receives a user speech, converts the speech into a text, and displays the text in a text input box. The mobile phone performs semantic understanding on the text based on a context, and searches for media information based on a semantic understanding result. After a matched image is found, a cursor is changed to a second-style cursor, and an image-type identifier may be displayed in the cursor, to indicate that the matched image is found. Refer to a user interface 1202. After a user taps the second-style cursor, a window 1211 is displayed. A size of the window may be less than a full-screen size. For example, the window may cover an upper layer of a soft keyboard window. The found image is displayed in the window 1211. Refer to a user interface 1203. The user may drag the image to a chat window. Refer to a user interface 1204. After the image is dragged to the chat window and is released, the image is sent. Optionally, the text entered by the user in the text input box may be retained in the text box, or the text in the text input box may also be sent when the image is sent.

The following uses an email application as an example to describe a user interface change in an interaction process implemented in embodiments of this application.

FIG. 13A to FIG. 13C are a diagram of user interfaces in which a mobile phone is used as an example to automatically search for matched media information based on a user input and display a search result in an email application scenario according to an embodiment of this application.

As shown in FIG. 13A to FIG. 13C, in a user interface 1301 of an email application, as a user enters a text in an email body, the mobile phone displays the text entered by the user in a text input box, performs semantic understanding on the text, and searches for media information based on a semantic understanding result. After a matched audio file is found, a cursor is changed to a second-style cursor, and a speech-type identifier may be displayed in the cursor, to indicate that the matched audio file is found. Refer to a user interface 1302. After the user taps the second-style cursor, a window 1311 is displayed. A size of the window may be less than a full-screen size. For example, the window may cover an upper layer of a soft keyboard window. The found audio file is displayed in the window 1311. Refer to a user interface 1303. The user may drag the audio file to the email body. After the audio file is dragged to the email body and is released, the audio file may be added to the email as an attachment.

It may be understood that, in some of the foregoing examples, an example in which one piece of media information (for example, an image, a video, or a document) is selected from a plurality of pieces of found media information is used for description. However, embodiments of this application are not limited thereto. In some other embodiments of this application, the user is allowed to select two or more pieces of media information from the plurality of pieces of found media information. For example, a check box may be provided for each piece of found media information, so that the user can select the plurality of pieces of media information by using the check box.

The following describes a specific implementation of an interaction method provided in embodiments of this application with reference to FIG. 14.

FIG. 14 is a schematic flowchart of an interaction method according to an embodiment of this application, to automatically search for matched media information based on a text entered by a user, and further indicate a search status via a cursor change. The method may be performed by an electronic device. An example of the electronic device may be shown in FIG. 1. The method may alternatively be performed by a software functional module in an electronic device. An example of a software system architecture in the electronic device is shown in FIG. 2. The method may alternatively be implemented by using a combination of software and hardware.

As shown in FIG. 14, the method may include the following steps.

Step 1401: The electronic device receives a first user operation, and obtains a first text in response to the first user operation.

The first user operation may be used to enter a text. For example, the first user operation may be used to enter a text in a text input box of an application. For example, the first user operation is a user operation of entering a text in a text box. For example, in the memo application scenario shown in FIG. 7a-1 to FIG. 7a-5, the first user operation may be an operation of entering a memo text in a text input box by a user by using a soft keyboard. For another example, in the social application scenario shown in FIG. 11A to FIG. 11C, the first user operation may be an operation of entering a dialog text in a text input box by a user by using a soft keyboard. For another example, in the email application scenario shown in FIG. 13A to FIG. 13C, the first user operation may be an operation of entering email body content by a user. It may be understood that, in addition to being entered by using the soft keyboard, the text may also be entered in a manner like handwriting entering. Optionally, the first user operation may alternatively be an operation of obtaining a user speech and converting the user speech into a text, and the converted text may be displayed in the text input box. Optionally, the first user operation may alternatively be a "paste" operation. For example, the text input box may be touched and held, and a "Paste" option may be selected from a pop-up menu, so that a text in a clipboard may be entered in the text input box.

A text input process is usually a process of a plurality of consecutive inputs. For ease of description, in embodiments of this application, an operation of entering a paragraph of text content (which may include only one letter or one word, or may include a plurality of letters or words, or includes one or more sentences) in the text input box each time is referred to as a first user operation.

After the text is entered in the text input box of the application, as a response, a first text that includes at least currently entered text content may be obtained for semantic analysis and understanding. In this way, based on the text input operation of the user, semantic analysis and understanding can be performed in real time based on the text entered by the user. Optionally, the first text may include only the text entered by using the first user operation, for example, there is no text input before the text is entered by using the first user operation. Optionally, the first text may include the text entered by using the first user operation and a text entered before the first user operation is performed, for example, the examples shown in FIG. 7b-1 to FIG. 7b-4. Optionally, the first text includes the text entered by using the first user operation and a context, and the context has an association relationship with the text entered by using the first user operation. For example, in the social application scenario shown in FIG. 11A to FIG. 11C, the first user operation is a user operation of entering a text into a text input box provided by the social application, the text is chat content to be sent to the target user, and a context associated with the chat content includes text content in a chat message previously sent by the target user. It may be understood that, in a one-to-one chat (or referred to as a private chat) scenario, there is one target user. In a group chat scenario, there may be one or more target users. In other words, the context may include text content in chat messages of a plurality of users received by the application.

In a possible implementation, after the text input box receives a paragraph of texts (the texts may include one or more words or texts) at an n^{th} moment, if no new text is received within duration t, semantic understanding may be performed on the previously entered text content at an (n+t)^{th} moment. A value of the duration t may be preset.

In a possible implementation, a text that has been entered, on which semantic understanding has been performed, and for which matched media information is found based on a semantic understanding result may be marked as having been semantically understood. This can avoid subsequently performing repeated semantic understanding on the text.

Step 1402: The electronic device searches, based on the first text, for media information that matches semantics of the first text.

In a possible implementation, the electronic device may search for the matched media information based on the semantics of the first text. Optionally, in embodiments of this application, semantic analysis and understanding may be implemented based on a natural language processing tool driven by technologies such as artificial intelligence and a neural network.

In some embodiments of this application, a function of a text input box control may be extended, so that the text input box control can request or invoke, in response to a specified event (for example, an event of a user input operation, or an event in which pause time exceeds a specified threshold during a user input operation), the natural language processing tool to perform semantic understanding on the first text.

In a possible implementation, the electronic device may search media information stored in the electronic device for media information that matches the first text, for example, may search a local image library (for example, an album) of the electronic device for an image and a video that match the first text, and search a local folder of the electronic device used to store a user document for a document that matches the first text. In another possible implementation, the electronic device may obtain, from cloud space used by the electronic device, media information that matches the first text. The cloud space may be shared by the electronic device and another electronic device. In another possible implementation, if the electronic device is interconnected (for example, connected in a far field or a near field) to another electronic device, the electronic device may obtain, from the another electronic device via the connection to the another electronic device, media information that matches the first text. It may be understood that the foregoing plurality of obtaining manners may alternatively be used in combination. A search range or a source of the media information is not limited in embodiments of this application.

In a possible implementation, the electronic device may preferentially locally search the electronic device for the matched media information, to avoid network overheads as much as possible. If no matched media information is found, the electronic device searches the cloud space for the matched media information, and so on. A search sequence or a priority is not limited in embodiments of this application.

Step 1403: The electronic device changes a first-style cursor to a second-style cursor, where the second-style cursor may indicate that the media information is found.

In embodiments of this application, the first-style cursor is changed to the second-style cursor. In this way, the user can be indicated that the matched media information is found, so that the user performs next processing based on the found media information. For an example of the second-style cursor, refer to the description in the foregoing embodiments. For example, refer to several examples provided in FIG. 3 to FIG. 6(d).

Optionally, a type of the found media information may be indicated by using the second-style cursor. For example, the type of the media information may be indicated by displaying a text prompt, a type identifier, or the like in the second-style cursor. For example, in the example shown in FIG. 8A and FIG. 8B, a video-type identifier is displayed in the second-style cursor, to indicate that media information of a video type is found. For another example, in the example shown in FIG. 11A to FIG. 11C, a document-type identifier is displayed in the second-style cursor, to indicate that media information of a document type is found.

Optionally, when the found media information includes an image type, a thumbnail of a found image may be displayed in the second-style cursor, for example, a thumbnail of an image is displayed in the second-style cursor in the example shown in FIG. 7a-1 to FIG. 7a-5. In this way, a search result can be more intuitively indicated to the user. The thumbnail may be a thumbnail of an image that is in found images and that has a highest degree of matching with the first text.

Optionally, when the found media information includes the video type, a thumbnail of a video frame in a found video may be displayed in the second-style cursor, so that a search result can be more intuitively indicated to the user. The thumbnail may be a thumbnail of a video frame in a video that is in found videos and that has a highest degree of matching with the first text.

Optionally, when a plurality of types of media information are found, the second-style cursor may indicate that there are a plurality of types of found media information. For example, in the example shown in FIG. 6(a) to FIG. 6(d), a layered shape may indicate that a plurality of types of media information are found. Further, indication information of each of the plurality of types may be displayed by using a third user operation (for example, a tap operation in the example shown in FIG. 6(a) to FIG. 6(d)). In the example shown in FIG. 6(a) to FIG. 6(d), indication information of each type may be displayed in a menu manner. Specifically, a first menu may be displayed based on the third user operation, the first menu includes a plurality of function options, and each of the plurality of function options corresponds to one of the plurality of types of the found media information. It may be understood that a type of the third user operation is not limited in embodiments of this application.

Step 1404: The electronic device receives a second user operation on the second-style cursor, and displays the found media information in response to the second user operation.

Optionally, the second user operation is used to trigger the second-style cursor. For example, the second user operation may be an operation of tapping the second-style cursor or an operation of double-tapping the second-style cursor. A type of the second user operation is not limited in embodiments of this application.

In a possible implementation, the electronic device displays, based on the received second user operation, media information of a type requested by the second user operation. For example, if the second-style cursor indicates only one type of media information, for example, indicates that only media information of an image type is found, after receiving the second user operation (for example, an operation of tapping the second-style cursor), the electronic device displays a found image. For an example, refer to the scenarios shown in FIG. 7a-1 to FIG. 7b-4. For another example, if the second-style cursor indicates that a plurality of types of media information are found, the electronic device may display the first menu based on the third user operation. After receiving the second user operation, the electronic device displays media information of a corresponding type based on a type indicated by the second user operation. If the second user operation is used to trigger one of the plurality of function options, the electronic device displays, in response to the second user operation, media information of a type corresponding to the function option in the plurality of types of found media information. If the second user operation is used to trigger at least two of the plurality of function options, the electronic device displays, in response to the second user operation, at least two types of media information that are in the plurality of types of found media information and that correspond to the function option. For an example, refer to the scenario shown in FIG. 6(a) to FIG. 6(d).

In a possible implementation, the found media information may be displayed in descending order of matching degrees.

In the procedure shown in FIG. 14, the electronic device may automatically search for the matched media information based on the text entered by the user, and the user does not need to enter a search keyword and trigger a function button for executing a search command, so that a user operation can be simplified, and user experience can be improved. In addition, a cursor is changed to indicate that the matched media information is found, so that the user can learn of a search status, and can perform a subsequent operation based on the search status.

Further, in the procedure shown in FIG. 14, after the media information that matches the first text is displayed, the method may further include the following steps: receiving a fourth user operation, selecting first media information from the displayed media information in response to the fourth user operation, and applying the first media information to a first application. The first application is an application that receives the first user operation and obtains, by using the first user operation, text content entered by the user. In other words, the first user operation is performed on a text input box of the first application, so that the first application receives the text entered by the user.

The fourth user operation is used to: select one or more pieces of media information from the displayed media information (for ease of description, the one or more pieces of media information selected by using the fourth user operation are referred to as the first media information herein), and apply the first media information to the first application. Specific manners of applying the first media information to the first application may be different based on a function of the first application. For example, for a memo application, the first media information may be added to memo content. For a related example, refer to FIG. 7a-1 to FIG. 7b-4. For another example, for a social application, the first media information may be sent to a target user. For a related example, refer to FIG. 11A to FIG. 11C or FIG. 12A to FIG. 12D. For another example, for an email application, the first information may be added to an email as an attachment. For a related example, refer to FIG. 13A to FIG. 13C.

In some embodiments of this application, a text corresponding to the search result may be further highlighted, so that the user learns of a specific part of text based on which matched media information is found. In a possible implementation, the first text may be highlighted in a process of changing the first-style cursor to the second-style cursor, or after the first-style cursor is changed to the second-style cursor, or after the second user operation is received. An example may be shown in FIG. 8A and FIG. 8B.

In some embodiments of this application, after the first text is highlighted, the user may be further allowed to change a cursor position by using a user operation, so that media information can be subsequently added to the position. In a possible implementation, after the first-style cursor is changed to the second-style cursor and before the second user operation is received, a fifth user operation may be further received. The fifth user operation is used to move a cursor to a first position, and the first position is within a range of the first text. As a response, the electronic device may move the second-style cursor to the first position. An example may be shown in FIG. 8A and FIG. 8B.

In some embodiments of this application, after the first text is highlighted, a part of text in the highlighted first text may be further unhighlighted by using a user operation, and a new search process is triggered. In a possible implementation, after the first-style cursor is changed to the second-style cursor and before the second user operation is received, a sixth user operation may be further received. A part of text in the highlighted first text is unhighlighted in response to the sixth user operation. Matched media information is searched for based on a second text, where the second text is a text highlighted in response to the sixth user operation. An example may be shown in FIG. 9A to FIG. 9E.

In some embodiments of this application, before the first text is highlighted, highlighted text content may be further added by using a user operation, and a new search process is triggered. In a possible implementation, after the first-style cursor is changed to the second-style cursor and before the second user operation is received, a seventh user operation may be further received. A third text is highlighted in response to the seventh user operation, where the third text is a text other than the first text. Matched media information is searched for based on a fourth text, where the fourth text includes the first text and the third text. An example may be shown in FIG. 9A to FIG. 9E.

In some embodiments of this application, after the media information that matches the first text is found, or after the second user operation is received, a search keyword may be further displayed. Further, the user may be allowed to update the search keyword, so as to search for required media information. In a possible implementation, after displaying the search keyword, the electronic device may receive an eighth user operation, where the eighth user operation is used to: update the search keyword, and request to search for matched media information based on an updated search keyword. In response to the eighth user operation, the electronic device may search for the matched media information based on the updated search keyword, and display the media information found based on the updated search keyword. An example may be shown in FIG. 10A to FIG. 10D.

An embodiment of this application further provides an interaction method applied to an electronic device. According to the method, matched media information may be searched for based on a media information type selected by a user and a text and/or a context that are/is entered by the user.

The following separately uses a memo application scenario, a social application scenario, and a scenario in which information is uploaded for authentication or registration as examples to describe a user operation and a user interface change in an interaction process implemented in embodiments of this application.

First, a memo application is used as an example to describe a user interface change process based on a user operation during implementation of embodiments of this application.

FIG. 15A to FIG. 15C are a diagram of user interfaces in which a mobile phone is used as an example to search for media information of a corresponding type based on a media information type selected by a user and display a search result in a memo application scenario according to an embodiment of this application.

As shown in FIG. 15A to FIG. 15C, an interface of a memo application includes a text input box 1511, a soft keyboard 1512, and a function option 1513. After being triggered, the function option 1513 may be used to search for a matched image based on a text entered by the user. The function option 1513 may be implemented by an image control. Refer to a user interface 1501. The user enters a text in the text input box 1512 by using the soft keyboard 1511. Refer to a user interface 1502. The user taps the function option 1513. Refer to a user interface 1503. As a response, an electronic device searches for, based on a text entered in a text box, an image that matches the text, and displays the found image in a pop-up window 1504. For a method for displaying the found image, refer to related content in FIG. 7b-1 to FIG. 7b-4. Details are not described herein again.

Optionally, the user interface 1501 may further include another function option, for example, a function option (for example, a video control) used to search for media information of a video type, and a function option (for example, a file control) used to search for media information of a document type. This is not limited in embodiments of this application. It may be understood that different types of function options or different types of controls may be used to search for different types of media information.

After found media information is displayed, media information selected from the found media information may be added to memo content based on a user operation. For related descriptions of selecting the media information and adding the media information to the memo content, refer to related content in FIG. 7b-1 to FIG. 7b-4. Details are not described herein again.

The following uses a social application scenario as an example to describe a user interface change process based on a user operation during implementation of embodiments of this application.

FIG. 16A to FIG. 16C are a diagram of user interfaces in which a mobile phone is used as an example to search for media information of a corresponding type based on a media information type selected by a user and display a search result in a social application scenario according to an embodiment of this application.

As shown in FIG. 16A to FIG. 16C, a user interface 1601 of a social application includes a text input box, a soft keyboard, a function option 1611, and a function option 1612. After being triggered, the function option 1611 may be used to search for a matched document based on semantics of a related text. After being triggered, the function option 1612 may be used to search for a matched image based on the semantics of the related text. The function option 1611 may be implemented by a file control, and the function option 1612 may be implemented by an image control. Refer to the user interface 1601. The user enters a text in the text input box by using the soft keyboard, and then the user taps the function option 1611. Refer to a user interface 1602. As a response, the mobile phone further performs semantic understanding based on the text in the text input box and a context, and searches for a matched document based on a semantic understanding result. The context may include chat content that is sent by a peer user and received by the mobile phone, for example, a chat record sent by the peer user in FIG. 16A to FIG. 16C. After the matched document is found, a window 1613 is displayed. A size of the window may be less than a full-screen size. For example, the window may cover an upper layer of a soft keyboard window. A plurality of found documents are displayed in the window 1613, and the plurality of documents may be sorted in descending order of matching degrees and/or based on file types. The user may select a document and drag the document to the text input box or a chat window. Refer to a user interface 1603. After the selected document is dragged to a target position and is released, the document may be sent. Optionally, the text entered by the user in the text input box may also be sent at the same time.

The following uses a scenario in which information is uploaded for authentication or registration as an example to describe a user interface change process based on a user operation during implementation of embodiments of this application.

Refer to FIG. 17A and FIG. 17B. An authentication user interface 1701 is used to upload a photo of a front side and a photo of a back side of an identity card of a user to a network side, and the user interface includes a function option 1711 and a function option 1712. After being triggered, the function option 1711 and the function option 1712 may be used to automatically search for an identity card image. The function option 1711 is used as an example. The function option 1711 may be an image control. In addition, a text prompt "Upload the front side" is displayed on the function option 1711. Refer to a user interface 1702. Further, after the user taps the function option 1711, as a response, a mobile phone searches for the identity card image, may further search for an image of a front side of the identity card, and displays the found image in a pop-up window 1713. The user may upload the found image.

Refer to FIG. 18A and FIG. 18B. A resume upload user interface 1801 is used to upload a resume file of a user to a network side, and the user interface includes a function option 1811. After being triggered, the function option 1811 may be used to automatically search for a resume of the user. Refer to a user interface 1802. After the user taps the function option 1811, as a response, a mobile phone searches for the resume of the user, and displays the found resume file in a pop-up window 1813. The user may upload the found file.

The following describes a specific implementation of an interaction method provided in embodiments of this application with reference to FIG. 19.

FIG. 19 is a schematic flowchart of an interaction method according to an embodiment of this application, to automatically search for matched media information based on a function option triggered by a user. The method may be performed by an electronic device. An example of the electronic device may be shown in FIG. 1. The method may alternatively be performed by a software functional module in an electronic device. An example of a software system architecture in the electronic device is shown in FIG. 2. The method may alternatively be implemented by using a combination of software and hardware.

As shown in FIG. 19, the method may include the following steps.

Step 1901: The electronic device receives a first user operation, where the first user operation is used to trigger a first function option in a user interface, and the first function option corresponds to a first media information type.

Optionally, the first function option may be implemented by using a control. The first user operation that triggers the first function option may be a tap operation, a double-tap operation, or a user operation of another type. This is not limited in embodiments of this application.

Optionally, the first function option may correspond to one media information type, for example, correspond to only an image type, or correspond to only a document type, or correspond to only a video type. Optionally, the first function option may alternatively correspond to a plurality of media information types, for example, may correspond to an image type and a video type, or may correspond to an image type and a document type. This may be specifically implemented through programming design of the first function option. This is not limited in embodiments of this application.

For related descriptions of media information and a type of the media information in this embodiment of this application, refer to the foregoing embodiments. Details are not described herein again.

Step 1902: The electronic device obtains a context associated with the first user operation and/or the first function option.

In a possible implementation, a process of obtaining the context associated with the first user operation may include: obtaining a text entered by the user before the first user operation, and using the text as a context used to search for related media information. For an example, refer to the scenario shown in FIG. 15A to FIG. 15C.

In a possible implementation, a process of obtaining the context associated with the first user operation may include: obtaining a text entered by the user before the first user operation and content included in a message that is sent by another user and received by the electronic device. For an example, refer to the scenario shown in FIG. 16A to FIG. 16C.

In a possible implementation, a process of obtaining the context associated with the first function option may include: obtaining first information associated with the first function option, where the first information is used to describe media information obtained by using the first function option; and using the first information as the context. For an example, refer to the scenario shown in FIG. 17A and FIG. 17B. In the scenario, first information associated with the function option 1711 is "Upload a photo of a front side of your identity card". The information is used to describe a function of the function option, and includes the media information corresponding to the first function option. For example, in this example, "a photo of a front side of your identity card" describes media information corresponding to the function option.

Step 1903: The electronic device searches for matched media information based on semantics of the context and the first media information type corresponding to the first function option.

In a possible implementation, the electronic device may search media information stored in the electronic device for matched media information, for example, may search a local image library (for example, an album) of the electronic device for an image and a video, and search a local folder of the electronic device used to store a user document for a document. In another possible implementation, the electronic device may search cloud space used by the electronic device for matched media information, where the cloud space may be shared by the electronic device and another electronic device. In another possible implementation, if the electronic device is interconnected to another electronic device, the electronic device may obtain matched media information from the another electronic device via the connection to the another electronic device. It may be understood that the foregoing plurality of obtaining manners may alternatively be used in combination. A search range or a source of the media information is not limited in embodiments of this application.

In a possible implementation, the electronic device may preferentially locally search the electronic device for the matched media information, to avoid network overheads as much as possible. If no matched media information is found, the electronic device searches the cloud space for the matched media information, and so on. A search sequence or a priority is not limited in embodiments of this application.

Step 1904: The electronic device displays the found media information.

In a possible implementation, the found media information may be displayed in descending order of matching degrees.

In the procedure shown in FIG. 19, the electronic device may automatically search for the matched media information based on the first function option triggered by the user, and the user does not need to enter a search keyword and trigger a function button for executing a search command, so that a user operation can be simplified, and user experience can be improved.

Based on the foregoing embodiments, this application further provides an apparatus. The apparatus may be an electronic device or an internal module of the electronic device. The apparatus includes a plurality of functional modules. The plurality of functional modules interact with each other to implement functions performed by the electronic device in the methods described in embodiments of this application. The plurality of functional modules may be implemented based on software, hardware, or a combination of software and hardware, and the plurality of functional modules may be randomly combined or divided based on a specific implementation, to perform, for example, the method steps performed by the electronic device in the foregoing embodiments of this application.

Based on the foregoing embodiments, this application further provides an apparatus. The apparatus may be an electronic device or an internal module of the electronic device. The apparatus includes at least one processor and at least one memory. The at least one memory stores computer program instructions. When the electronic device runs, the at least one processor performs functions performed by the electronic device in the methods described in embodiments of this application, for example, performs the method steps performed by the electronic device in the foregoing embodiments of this application.

Based on the foregoing embodiments, this application further provides a computer program product. The computer program product includes a computer program (which may also be referred to as code or instructions). When the computer program is run, the methods described in embodiments of this application are performed.

Based on the foregoing embodiments, this application further provides a computer-readable storage medium. The computer-readable storage medium stores a computer program (which may also be referred to as code or instructions). When the code or the instructions are executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible embodiment, the chip system further includes a memory. The memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that these modifications and variations fall within the scope of protection defined by the following claims and their equivalent technologies.

## Claims

1. An interaction method, applied to an electronic device, wherein the method comprises:
receiving a first user operation, and obtaining a first text in response to the first user operation, wherein the first user operation is used to enter a text, and the first text comprises the text entered by using the first user operation;
searching, based on the first text, for media information that matches semantics of the first text;
changing a first-style cursor to a second-style cursor, wherein the second-style cursor indicates that the media information is found; and
receiving a second user operation on the second-style cursor, and displaying the media information in response to the second user operation.

2. The method according to claim 1, wherein the second-style cursor indicates a type and/or content of the found media information.

3. The method according to claim 1 or 2, wherein the second-style cursor comprises one or more of the following:
a thumbnail of the content of the media information; and
indication information of a media type, wherein the indication information of the media type comprises an icon indicating the type of media information, and/or a text indicating the type of the media information.

4. The method according to claim 3, wherein the media information comprises an image, and a thumbnail of a found image is displayed in the second-style cursor; or
the media information comprises a video, and a thumbnail of a video frame in a found video is displayed in the second-style cursor.

5. The method according to any one of claims 2 to 4, wherein the second-style cursor indicates that media information of a plurality of media types is found.

6. The method according to claim 5, wherein receiving the second user operation on the second-style cursor, and displaying the media information comprises:
receiving a third user operation;
displaying a first menu in response to the third user operation, wherein the first menu comprises a plurality of function options, and each of the plurality of function options corresponds to one of the plurality of media types;
receiving a selection operation of selecting at least one function option in the plurality of function options by a user; and
displaying, in response to the selection operation, media information corresponding to the at least one function option.

7. The method according to any one of claims 1 to 6, wherein the first user operation is performed on a text input box of a first application; and
after displaying the media information, the method further comprises:
receiving a fourth user operation, selecting the first media information from the displayed media information in response to the fourth user operation, and applying the first media information to the first application.

8. The method according to any one of claims 1 to 7, wherein after changing the first-style cursor to the second-style cursor or after receiving the second user operation, the method further comprises:
highlighting the first text.

9. The method according to claim 8, wherein after changing the first-style cursor to the second-style cursor and before receiving the second user operation, the method further comprises:
receiving a fifth user operation, wherein the fifth user operation is used to move a cursor to a first position, and the first position is within a range of the first text; and
moving the second-style cursor to the first position in response to the fifth user operation.

10. The method according to claim 9, wherein after changing the first-style cursor to the second-style cursor and before receiving the second user operation, the method further comprises:
receiving a sixth user operation, and unhighlighting a part of text in the highlighted first text in response to the sixth user operation; and
searching, based on a second text, for media information that matches semantics of the second text, wherein the second text is a text highlighted in response to the sixth user operation.

11. The method according to claim 8, wherein after changing the first-style cursor to the second-style cursor and before receiving the second user operation, the method further comprises:
receiving a seventh user operation, and highlighting a third text in response to the seventh user operation, wherein the third text is a text other than the first text; and
searching, based on a fourth text, for media information that matches semantics of the fourth text, wherein the fourth text comprises the first text and the third text.

12. The method according to any one of claims 1 to 11, wherein after the media information that matches the semantics of the first text is found or after the second user operation is received, the method further comprises:
displaying a search keyword.

13. The method according to claim 12, further comprising:
receiving an eighth user operation, wherein the eighth user operation is used to: update the search keyword, and request to search for matched media information based on an updated search keyword;
in response to the eighth user operation, searching for the matched media information based on the updated search keyword; and
displaying the media information found based on the updated search keyword.

14. The method according to any one of claims 1 to 13, wherein obtaining the first text comprises:
obtaining the text entered by using the first user operation and a context associated with the text entered by using the first user operation.

15. The method according to any one of claims 1 to 14, wherein searching, based on the first text, for the media information that matches the semantics of the first text comprises one or more of the following:
searching the electronic device for the media information that matches the semantics of the first text;
searching another electronic device interconnected with the electronic device for the media information that matches the semantics of the first text; and
searching cloud space of the electronic device for the media information that matches the semantics of the first text.

16. The method according to any one of claims 1 to 15, wherein the media information comprises one or more of the following: an image, a video, an audio, a document, an electronic bill, an electronic card, an address book, contact information, a service widget, and a URL.

17. An interaction method, applied to an electronic device, wherein the method comprises:
receiving a first user operation, wherein the first user operation is used to trigger a first function option in a user interface, and the first function option corresponds to a first media information type;
obtaining a context associated with the first user operation and/or the first function option;
searching for matched media information based on semantics of the context and the first media information type corresponding to the first function option; and
displaying the found media information.

18. The method according to claim 17, wherein obtaining the context associated with the first user operation comprises:
obtaining a text entered by a user before the first user operation and/or a text comprised in a message received by the electronic device, and using the text as the context.

19. The method according to claim 17, wherein obtaining the context associated with the first function option comprises:
obtaining first information associated with the first function option, wherein the first information is used to describe media information corresponding to the first function option; and using the first information as the context.

20. The method according to any one of claims 17 to 19, wherein searching for the matched media information comprises one or more of the following:
searching the electronic device for the matched media information;
searching another electronic device interconnected with the electronic device for the matched media information; and
searching cloud space of the electronic device for the matched media information.

21. The method according to any one of claims 17 to 20, wherein the media information comprises one or more of the following: an image, a video, an audio, a document, an electronic bill, an electronic card, an address book, contact information, a service widget, and a URL.

22. An apparatus, comprising a unit or module configured to perform the method according to any one of claims 1 to 16, or comprising a unit or module configured to perform the method according to any one of claims 17 to 21.

23. An apparatus, comprising one or more processors and one or more memories, wherein the one or more memories store one or more programs, and when the program is executed by the one or more processors, the apparatus is enabled to perform the method according to any one of claims 1 to 16 or the method according to any one of claims 17 to 21.

24. A chip system, wherein the chip system comprises at least one chip and a memory, and the at least one chip is configured to read and execute a program stored in the memory, to implement the method according to any one of claims 1 to 16 or the method according to any one of claims 17 to 21.

25. A computer-readable storage medium, wherein the computer-readable storage medium comprises a program, and when the program is run on an apparatus, the apparatus is enabled to perform the method according to any one of claims 1 to 16 or the method according to any one of claims 17 to 21.

26. A computer program product, wherein when the computer program product runs on an apparatus, the apparatus is enabled to perform the method according to any one of claims 1 to 16 or the method according to any one of claims 17 to 21.
